# EUROPEAN PATENT APPLICATION

(11) **EP 1 394 740 A2**
(43) Date of publication of application: **03.03.2004**
(21) Application number: 03255298.6
(22) Date of filing: 27.08.2003
(51) Int. Cl.: G06T 5/00

(54) **Image processing dependent on an image capturing device characteristic**

(30) Priority: 30.08.2002 JP 2002256034
(71) Applicant: KONICA CORPORATION, Tokyo (JP)
(72) Inventor:
(74) Representative: Nicholls, Michael John

(57) **Abstract**

There is described an image-capturing apparatus such as a digital camera, an image processing apparatus in which an optimization processing is applied to the digital image data obtained by the image-capturing apparatus to form an output-referred image on the outputting medium, and an image recording apparatus. The image-capturing apparatus includes a scene-referred raw data generating section to generate scene-referred raw data, which directly represent the image while depending on image-capturing characteristics of the apparatus; a reproduction-auxiliary data generating section to generate reproduction-auxiliary data, based on which an image-capturing characteristic compensation processing is to be applied to the scene-referred raw data generated by the scene-referred raw data generating section, so as to generate scene-referred image data in a standardized format from the scene-referred raw data; and a storage controlling section to attach the reproduction-auxiliary data to the scene-referred raw data in order to store both of them into a storage medium.

## Description

### BACKGROUND OF THE INVENTION

The present invention relates to an image-capturing apparatus such as a digital camera, an image processing apparatus wherein optimization processing is applied to the digital image data obtained by this image-capturing apparatus to form an output-referred image on the outputting medium, and an image recording apparatus.

At present, the digital image data captured by an image-capturing apparatus is distributed through such a memory device as a CD-R (Compact Disk Recordable), floppy disk (registered trade name) and memory card or the Internet, and is displayed on such a display monitor as a CRT (Cathode Ray Tube), liquid crystal display and plasma display or a small-sized liquid crystal monitor display device of a cellular phone, or is printed out as a hard copy image using such an output device as a digital printer, inkjet printer and thermal printer. In this way, display and print methods have been diversified in recent years.

When digital image data is displayed and output for viewing, it is a common practice to provide various types of image processing typically represented by gradation adjustment, brightness adjustment, color balancing and enhancement of sharpness to ensure that a desired image quality is obtained on the display monitor used for viewing or on the hard copy.

In response to such varied display and printing methods, efforts have been made to improve the general versatility of digital image data captured by an image-capturing apparatus. As part of these efforts, an attempt has been made to standardize the color space represented by digital RGB (Red, Green and Blue) signals into the color space that does not depend on characteristics of an image-capturing apparatus. At present, large amounts of digital image data have adopted the sRGB (See Multimedia Systems and Equipment - Color Measurement and Management - Part 2-1: Color Management - Default RGB Color Space - sRGB" IEC61966-2-1) as a standardized color space. The color space of this sRGB has been established to meet the color reproduction area for a standard CRT display monitor.

Generally, a digital camera is equipped with an image-capturing device (CCD type image-capturing device, hereinafter referred to simply as "CCD") having a photoelectric conversion function with color sensitivity provided by a combination of a CCD (charge coupled device), a charge transfer device and a mosaic color filter. The digital image data output from the digital camera is obtained after the electric original signal gained by conversion via the CCD has been corrected by the photoelectric conversion function of the image capturing device, and processing of file conversion and compression into the predetermined data format standardized to permit reading and display by image editing software.

Correction by the photoelectric conversion function of the image capturing device includes, for example, gradation correction, spectral sensitivity, crosstalk correction, dark current noise control, sharpening, white balance adjustment and color saturation adjustment. The above-mentioned standardized data format widely known includes Baseline Tiff Rev. 6.0 RGB Full Color Image adopted as a non-compressed file of the Exif (Exchangeable Image File Format) file and compressed data file format conforming to the JPEG format.

The Exif file conforms to the above-mentioned sRGB, and the correction of the photoelectric conversion function of the above-mentioned image-capturing element is established so as to ensure the most suitable image quality on the display monitor conforming to the sRGB.

For example, if a digital camera has the function of writing into the header of the digital image data the tag information for display in the standard color space (hereinafter referred to as "monitor profile") of the display monitor conforming to the sRGB signal, and accompanying information indicating the device dependent information such as the number of pixels, pixel arrangement and number of bits per pixel as meta-data as in the case of Exif format, and if only such a data format is adopted, then the tag information can be analyzed by the image edit software (e.g. Photoshop by Abode for displaying the above-mentioned digital image data on the digital display monitor, conversion of the monitor profile into the sRGB can be prompted, and modification can be processed automatically. This capability reduces the differences in apparatus characteristics among different displays, and permits viewing of the digital image data photographed by a digital camera under the optimum condition.

In addition to the above-mentioned information dependent on device type, the above-mentioned accompanying information includes;
information directly related to the camera type (device type) such as a camera name and code number,
information on photographing conditions such as exposure time, shutter speed, f-stop number (F number), ISO sensitivity, brightness value, subject distance range, light source, on/off status of a stroboscopic lamp, subject area, white balance, zoom scaling factor, subject configuration, photographing scene type, the amount of reflected light of the stroboscopic lamp source and color saturation for photographing, and tags (codes) for indicating the information related to a subject. The image edit software and output device have a function of reading the above-mentioned accompanying information and making the quality of hardware image more suitable.

The image displayed on such a display device as a CRT display monitor and the hard copy image printed by various printing devices have different color reproduction areas depending on the configuration of the phosphor or color material to be used. For example, the color reproduction area of the CRT display monitor corresponding to the sRGB standard space has a wide bright green and blue area. It contains the area that cannot be reproduced by the hard copy formed by a silver halide photographic printer, inkjet printer and conventional printer. Conversely, the cyan area of the conventional printing or inkjet printing and the yellow area of the silver halide photographic printing contain the area that cannot be reproduced by the CRT display monitor corresponding to the sRGB standard color space. (For example, see "Fine imaging and digital photographing" edited by the Publishing Commission of the Japan Society of Electrophotography, Corona Publishing Co., P. 444). In the meantime, some of the scenes of the subject to be photographed may contain the color in the area that cannot be reproduced in any of these areas for color reproduction.

As described above, the color space (including the sRGB) optimized on the basis of display and printing by a specific device is accompanied by restrictions in the color gamut where recording is possible. So when recording the information picked up by a photographing device, it is necessary to make adjustment of mapping by compressing the information into the color gamut where recording is allowed. The simplest way is provided by clipping where the color chromaticity point outside the color gamut where recording is possible is mapped onto the boundary of the nearest color gamut. This causes the gradation outside the color gamut to be collapsed, and the image will give a sense of incompatibility to the viewer. To avoid this problem, non-liner compression method is generally used. In this method, the chromaticity point in the area where chroma is high in excess of an appropriate threshold value is compressed smoothly according to the size of the chroma. As a result, chroma is compressed and recording is carried out even at the chromaticity point inside the color gamut where recording is possible. (For the details of the procedure of mapping the color gamut, see "Fine imaging and digital photographing" edited by the Publishing Commission of the Japan Society of Electrophotography, Corona Publishing Co., P. 447, for example).

The image displayed on such a display device as a CRT display monitor, the hard copied image printed by various types of printing devices, or color space (including sRGB) optimized on the basis of display and printing by these devices are restricted to the conditions where the area of brightness that allows recording and reproduction is of the order of about 100 to 1. By contrast, however, the scene of the subject to be photographed has a wide area of brightness, and it often happens that the order of several thousands to 1 is reached outdoors. (See "Handbook on Science of Color, New Version, 2nd Print" by Japan Society for Science of Colors, Publishing Society of the University of Tokyo, P. 926, for example). Accordingly, when recording the information gained by the image capturing device, compression is also necessary for brightness. In this processing, adequate conditions must be set for each image in conformity to the dynamic range of the scene to be photographed, and the range of brightness for the main subject in the scene to be photographed.

However, when compression has been carried out for the color gamut and brightness area as described above, information on gradation prior to compression or information prior to clipping is lost immediately due to the principle of the digital image to be recorded in terms of the discrete value. The original state cannot be recovered. This imposes a big restriction on the general versatility of high-quality digital image.

For example, when the image recorded in the sRGB standard color space is printed, mapping must be carried out again based on the differences between the sRGB standard color space and the area for color reproduction of the printing device. For the image recorded in the sRGB standard color space, however, the information on gradation in the area compressed at a time of recording is lost. So the smoothness of gradation is deteriorated as compared to the case where the information captured by the photographing device is mapped directly in the area for color reproduction of the printing device. Further, if gradation compression conditions are not adequate at a time of recording, and there are problems such as a whitish picture, dark face, deformed shadow and conspicuous white skipping in the highlighted area, improvement is very inadequate as compared to the case where the new image is created again from the information gained by the photographing device, even if the gradation setting is changed to improve the image. This is because information on gradation prior to compression, and information on the portion subjected to deformation or white skipping have been already lost.

As a solution of the above-mentioned problems, the art of storing the process of image editing as a backup data and returning it to the state prior to editing whenever required has long been known. For example, the Official Gazette of Japanese Application Patent Laid-Open Publication No. Hei 07-57074 discloses a backup device wherein, when the digital image is subjected to local modification by image processing, the image data on the difference between the digital image data before image processing and that after image processing is saved as backup data. The Official Gazette of Japanese Application Patent Laid-Open Publication No. 2001-94778 discloses a method for recovering the digital image data before editing, by saving the image data on the difference between the digital image data before image processing and that after image processing. These technologies are effective from the viewpoint of preventing information from being lost, but the number of sheets that can be photographed by a camera is reduced with the increase in the amount of data recorded in the media.

The problems introduced above are caused by the procedure where the information on the wide color gamut and brightness area gained by a photographing device is recorded after having being compressed into the output-referred image data in the state optimized by assuming an image to be viewed. By contrast, if the information on the wide color gamut and brightness area gained by a photographing device is recorded as scene-referred image data that is not compressed, then inadvertent loss of information can be prevented. The standard color space suited to record such scene-referred image data is proposed, for example, by RIMM RGB (Reference Input Medium Metric RGB) and ERIMM RGB (Extended Reference Input Medium Metric RGB). (See the Journal of Imaging Science and Technology, Vol. 45 p p. 418 to 426 (2001)).

However, the data expressed in the standard color space like the one described above, is not suitable for being displayed directly on the display monitor and viewed. Generally, a digital camera has a built-in display monitor or is connected to it in order for the user to check the angle of view before photographing or to check the photographed image after photographing. When photographed data is recorded as output referred image data like the sRGB, it can be displayed directly on the display monitor, without the data being converted. Despite this advantage, when the photographed data is recorded as scene-referred image data, the data must be subjected to the processing of re-conversion into the output-referred image data in order to display that data. Such double processing of conversion inside the camera increases the processing load and power consumption, and causes the continuous shooting capability to be reduced, and imposes restrictions on the number of sheets to be shot in the battery mode.

The Official Gazette of Japanese Application Patent Laid-Open Publication No. Hei 11-261933 discloses an image processing apparatus characterized by two modes; a mode of recording in the form of an image signal displayed on the display means and a mode of recording in the form of captured image signal. The form of image signal in the latter case is generally called RAW data. Using the special-purpose application software (called "development software"), such digital image data can be converted into output-referred image data of the above-mentioned Exif file or the like for display or printing (called "electronic development" or simply "development"). Since the RAW data retains all information at a time of photographing, it permits output-referred image data to be remade. If other color system files such as CMYK are created directly, there will no inadvertent modification of the color system due to the difference in color gamut from the display monitor (sRGB). However, the RAW data is recorded according to the color space based on the spectral sensitivity characteristics inherent to the type of a photographing apparatus and the file format inherent to the type of a photographing apparatus. Accordingly, image suitable to display and printing can be obtained only when special-purpose development software inherent to the type of the photographing apparatus is used.

### SUMMARY OF THE INVENTION

To overcome the abovementioned drawbacks in conventional image-capturing apparatus, image-processing apparatus and image-recording apparatus, it is an object of the present invention to provide an image-capturing apparatus for recording in a general-purpose manner without information on captured image being lost, an image processing apparatus using the same and an image recording apparatus.

Accordingly, to overcome the cited shortcomings, the abovementioned object of the present invention can be attained by image-capturing apparatus, image-processing apparatus, image-recording apparatus and image-processing methods described as follow.
(1) An apparatus for capturing an image, comprising: a scene-referred raw data generating section to generate scene-referred raw data, which directly represent the image while depending on image-capturing characteristics of the apparatus; a reproduction-auxiliary data generating section to generate reproduction-auxiliary data, based on which an image-capturing characteristic compensation processing is to be applied to the scene-referred raw data generated by the scene-referred raw data generating section, so as to generate scene-referred image data in a standardized format from the scene-referred raw data; and a storage controlling section to attach the reproduction-auxiliary data to the scene-referred raw data in order to store both of them into a storage medium.
(2) The apparatus of item 1, further comprising: an image-capturing data generating section to generate image-capturing data, which represent image-capturing conditions established at a time of capturing the image; wherein the storage controlling section attaches both the reproduction-auxiliary data and the image-capturing data to the scene-referred raw data in order to store all of them into the storage medium.
(3) An apparatus for processing data, comprising: a receiving section to receive scene-referred raw data, which directly represent an image captured by an image-capturing apparatus while depending on image-capturing characteristics of the image-capturing apparatus, and to receive reproduction-auxiliary data in respect to the scene-referred raw data; and a scene-referred image data generating section to generate scene-referred image data from the scene-referred raw data received by the receiving section, based on the reproduction-auxiliary data received by the receiving section, by applying an image-capturing characteristic compensation processing to the scene-referred raw data.
(4) The apparatus of item 3, wherein the scene-referred image data are generated in a standardized format from the scene-referred raw data.
(5) The apparatus of item 3, wherein the receiving section also receives image-capturing data, which represent image-capturing conditions established at a time of capturing the image.
(6) The apparatus of item 4, further comprising: an output-referred image data generating section to generate output-referred image data, based on which a reproduced image is formed on an outputting medium, by applying an image-processing for optimizing the reproduced image to the scene-referred image data generated by the scene-referred image data generating section.
(7) The apparatus of item 5, further comprising: an output-referred image data generating section to generate output-referred image data, based on which a reproduced image is formed on an outputting medium, by applying an image-processing for optimizing the reproduced image to the scene-referred image data generated by the scene-referred image data generating section; wherein contents of the image-processing are determined on the basis of the image-capturing data received by the receiving section.
(8) An apparatus for outputting a reproduced image onto an outputting medium, comprising: a receiving section to receive scene-referred raw data, which directly represent an image captured by an image-capturing apparatus while depending on image-capturing characteristics of the image-capturing apparatus, and to receive reproduction-auxiliary data in respect to the scene-referred raw data; a scene-referred image data generating section to generate scene-referred image data from the scene-referred raw data received by the receiving section, based on the reproduction-auxiliary data received by the receiving section, by applying an image-capturing characteristic compensation processing to the scene-referred raw data; an output-referred image data generating section to generate output-referred image data, based on which a reproduced image is formed on an outputting medium, by applying an image-processing for optimizing the reproduced image to the scene-referred image data generated by the scene-referred image data generating section; and an image-forming section to form the reproduced image on the outputting medium, based on the output-referred image data.
(9) The apparatus of item 8, wherein the receiving section also receives image-capturing data, which represent image-capturing conditions established at a time of capturing the image; and wherein contents of the image-processing are determined on the basis of the image-capturing data received by the receiving section.
(10) A method for processing data, comprising the steps of: receiving scene-referred raw data, which directly represent an image captured by an image-capturing apparatus while depending on image-capturing characteristics of the image-capturing apparatus, and reproduction-auxiliary data in respect to the scene-referred raw data; and applying an image-capturing characteristic compensation processing to the scene-referred raw data, based on the reproduction-auxiliary data received in the receiving step, in order to generate scene-referred image data from the scene-referred raw data.
(11) The method of item 10, wherein the scene-referred image data are generated in a standardized format from the scene-referred raw data.
(12) The method of item 11, wherein the reproduction-auxiliary data serve as image-capturing characteristic compensation data, which are employed for converting the scene-referred raw data into the scene-referred image data in a standardized color space.
(13) The method of item 11, wherein, in the receiving step, image-capturing data, which represent image-capturing conditions established at a time of capturing the image, are also received.
(14) The method of item 11, further comprising the step of: generating output-referred image data, based on which a reproduced image is formed on an outputting medium, by applying an image-processing for optimizing the reproduced image to the scene-referred image data generated in the applying step.
(15) The method of item 13, further comprising the step of: generating output-referred image data, based on which a reproduced image is formed on an outputting medium, by applying an image-processing for optimizing the reproduced image to the scene-referred image data generated in the applying step; wherein contents of the image-processing are determined on the basis of the image-capturing data received in the receiving step.
   Further, to overcome the abovementioned problems, other image-capturing apparatus, image-processing apparatus, image-recording apparatus, embodied in the present invention, will be described as follow:
(16) An image-capturing apparatus characterized by comprising:
   a scene-referred raw data generating section to generate scene-referred raw data dependent on the image-capturing characteristics of the image-capturing apparatus by image capturing;
   a reproduction-auxiliary data generating section to generate reproduction-auxiliary data based on which image-capturing characteristic compensation processing is to be applied to the above-mentioned scene-referred image data generated by the above-mentioned scene-referred raw data generating section, so as to generate scene-referred raw data standardized in respect to the scene-referred raw data; and
   a storage controlling section whereby the above-mentioned reproduction-auxiliary data generated by the above-mentioned reproduction-auxiliary data generating section is attached to the above-mentioned scene-referred raw data generated by the above-mentioned scene-referred raw data generating section, and both of them are stored into a storage medium.

   Scene-referred raw data dependent on the image-capturing characteristics of an image-capturing apparatus is generated by image capturing. Then reproduction-auxiliary data is generated, and based on this data, image-capturing characteristic compensation processing is to be applied to the scene-referred image data, so as to generate scene-referred raw data standardized in respect to the scene-referred raw data. The reproduction-auxiliary data is attached to the scene-referred raw data, and is further stored into the medium. This means omission of processing of conversion to the scene-referred image data inside the image-capturing apparatus. This reduces the processing load and power consumption of the image-capturing apparatus, improves the processing (photographing) capability and increases the number of sheets to be processed (shot) in the battery mode. Further, this ensures the captured image to be recorded on the medium without the information being lost, and permits the image to be transferred to external equipment.
   The term "generate" appearing in the description of the present Specification refers to the act of a new image signal or data being produced by a program and processing circuit working in the image-capturing apparatus, image processing apparatus and image recording apparatus according to the present invention. The term "create" may be used synonymously with it.
   The "image-capturing apparatus" denotes an apparatus equipped with an image-capturing element (image sensor), and includes a so-called digital camera and scanner. The above-mentioned image-capturing element is exemplified by a CCD type image-capturing element with color sensitivity added through a combination of a Charge Coupled Device (CCD), a charge transfer device and a colored mosaic filter, and a CMOS type image-capturing device. The output current from those image-capturing devices is digitized by an analog-to-digital converter. The contents in each color channel in this phase represent signal intensities based on the spectral sensitivity inherent to the image-capturing device.
   The above-mentioned "scene-referred raw data dependent on the image-capturing characteristics" denotes a raw signal directly outputted from the image-capturing apparatus with information on a subject being faithfully recorded. It refers to the data digitized by the analog-to-digital converter and the same data having been subjected to correction of such a noise as fixed pattern noise and dark current noise. It includes the above-mentioned RAW dat a. This scene-referred raw data is characterized by omission of the image processing for modifying the contents of data to improve such effects in image viewing as gradation conversion, sharpness enhancement and color saturation enhancement, and processing of mapping the signal intensify of each color channel based on the spectral sensitivity inherent to the image-capturing device, onto the standardized color space such as the above-mentioned RIMM and sRGB. The amount of information on the scene-referred raw data (e.g. number of gradations) is preferred to be equal to greater than that of the information required by the output-referred data (e.g. number of gradations), in conformity to the performances of the above-mentioned analog-to-digital converter. For example, when the number of gradations for the output-referred data is 8 bits per channel, the number of gradations for the scene-referred raw data is preferred to be 12 bits or more. It is more preferred to be 14 bits or more, and still more preferred to be 16 bits or more.
   "Standardized scene-referred image data" signifies the image data characterized in that at least the signal intensity of each color channel based on the spectral sensitivity of the image-capturing device has been already mapped onto the above-mentioned standard color space such as RIMM RGB and ERIMM RGB, wherein this image data is further characterized by omission of image processing for modifying the data contents in order to improve such effects in viewing the image as gradation conversion, sharpness enhancement and color saturation enhancement. It is preferred that the scene-referred raw data be subjected to correction (optoelectronic conversion function defined in IS01452, e.g. "Fine imaging and digital photographing" edited by the Publishing Commission of the Japan Society of Electrophotography, Corona Publishing Co., P. 449 of the photoelectric conversion characteristics of the image-capturing apparatus. The amount of the standardized scene-referred image data (e.g. number of gradations) is preferred to be equal to or greater than that of the information (e.g. number of gradations) required by the output-referred image data, in conformity to the above-mentioned analog-to-digital converter performances. For example, when the number of gradations for the output-referred image data is 8 bits per channel, then the number of gradations for the scene-referred image data is preferred to be equal to or greater than 12 bits. It is more preferred to be equal to or greater than 14 bits, and is still more preferred to be equal to or greater than 16 bits.
   "Image-capturing characteristic compensation processing (also referred to as image-capturing device characteristic compensation processing) for generating the standardized scene-referred image data" is defined as the process of converting the above-mentioned "scene-referred raw data dependent on the image-capturing characteristics (also referred to as image-capturing device characteristic) of an image-capturing apparatus" into the "standardized scene-referred image data". This processing depends on the state of "scene-referred raw data dependent on the image-capturing characteristics of the image-capturing apparatus", and includes the step of mapping at least the signal intensity of each color channel based on the spectral sensitivity of the image-capturing device, onto the above-mentioned standard color space such as RIMM RGB and ERIMM RGB. For example, when the "scene-referred raw data dependent on the image-capturing characteristics of an image-capturing apparatus" is not subjected to interpolation processing based of the color filter arrangement, execution of this processing is essential. (For the details of the interpolation processing based of the color filter arrangement, see "Fine imaging and digital photographing" edited by the Publishing Commission of the Japan Society of Electrophotography, Corona Publishing Co., P. 51). This will provide "standardized scene-referred raw data" where the differences of signal values among different image-capturing apparatuses are corrected, while almost the same amount of information as that of "scene-referred raw data" is retained.
   The "reproduction-auxiliary data based on which image-capturing characteristic compensation processing is applied" denotes the data based on which image-capturing characteristic compensation processing defined in the previous item can be applied, using only the information described in the data. This requires description of the information that permits mapping at least the signal intensity of each color channel based on the spectral sensitivity of the image-capturing device, onto the above-mentioned standard color space such as RIMM RGB and ERIMM RGB. To put it another way, this requires description of the matrix coefficient to be used for conversion into the specific standard color space such as RIMM RGB. For example, when only the device type of the image-capturing apparatus is described, it is possible that the image processing apparatus and image recording apparatus for executing this processing do not have a table showing correspondence between the device type name and the above-mentioned matrix coefficient. This cannot be said to be sufficient data. Further, even if there is no direct description of sufficient information for the execution of this processing, for example, the data can be said to be sufficient data if it contains description of the URL indicating the position of this information on the Internet. The "reproduction-auxiliary data based on which image-capturing characteristic compensation processing is applied" is preferred to be recorded as tag information to be written on the header of an image file.
   If the above-mentioned "reproduction-auxiliary data based on which image-capturing characteristic compensation processing is applied" is stored in the medium, independently of the "scene-referred raw data", information for associating the "reproduction-auxiliary data based on which image-capturing characteristic compensation processing is applied" with "scene-referred raw data" must be attached to both or either of them. Alternatively, a separate status information file containing the information on their relation must be attached to both or either of the two.
   "Medium" is defined as a storage medium used to store "scene-referred raw data" and "reproduction-auxiliary data based on which image-capturing characteristic compensation processing is applied". It can be any one of the compact flash (registered trademark), memory stick, smart media, multi-media card, hard disk, floppy (registered trademark) disk, magnetic storage medium (MO) and CD-R. The unit for writing on the storage medium can be integral with the image-capturing apparatus, a wired write unit connected via a cord, or a wireless unit installed independently or at a remote site connected through a communications line or via the Internet. It is also possible to provide such a function that, when the image-capturing apparatus is connected with the write unit for writing on the storage medium, "reproduction-auxiliary data based on which image-capturing characteristic compensation processing is applied" and "required data" are read directly from the image processing apparatus or image recording apparatus. When "stored into a storage medium", it is preferred that the standardized general-purpose file format such as TIFF, JPEG and Exif - not the format inherent to the image-capturing apparatus - be used.
(17) An image processing apparatus characterized by comprising:
   an input section to input scene-referred raw data dependent on the image-capturing characteristics of an image-capturing apparatus and reproduction-auxiliary data based on which image-capturing characteristic compensation processing is applied to this scene-referred raw data so as to generate the scene-referred image data standardized in respect to this scene-referred raw data; and
   a scene-referred image data generating section to generate the above-mentioned standardized scene-referred image data by applying image-capturing characteristic compensation processing to the scene-referred raw data inputted by the above-mentioned input section, based on the reproduction-auxiliary data for application of image-capturing characteristic compensation processing.

   The scene-referred raw data dependent on the image-capturing characteristics of an image-capturing apparatus and reproduction-auxiliary data based on which image-capturing characteristic compensation processing is applied to this scene-referred raw data so as to generate the scene-referred image data standardized in respect to this scene-referred raw data are input. The inputted scene-referred raw data is subjected to image-capturing characteristic compensation processing, based on the reproduction-auxiliary data for application of inputted image-capturing characteristic compensation processing. Then standardized scene-referred image data is generated. Accordingly, the data outputted from the image-capturing apparatus of item 1 can be used for printing in general households and workplaces.
   The "input" described in item 17 indicates the process in which "scene-referred raw data" and "reproduction-auxiliary data based on which image-capturing characteristic compensation processing is applied" are transmitted from an image-capturing apparatus to the image processing apparatus of the present invention.
   For example, when a image-capturing apparatus is connected with the above-mentioned unit for writing into the storage medium, and the image processing apparatus has also a function of reading the "scene-referred raw data" and "reproduction-auxiliary data based on which image-capturing characteristic compensation processing is applied" directly from the image-capturing apparatus, then the image processing apparatus of the present invention has means for connection with the image-capturing apparatus, and this connection means corresponds to the input section of the present invention. Further, when a portable "medium" such as a compact flash (registered trademark), memory stick, smart media, multi-media card, floppy (registered trademark) disk, photomagnetic storage medium (MO) or CD-R is used, then the image processing apparatus of the present invention has corresponding reading means, and this reading means corresponds to the input section of the present invention. Further, when the write unit is installed in a wireless state independently or at a remote site connected through a communications line or via the Internet, then the image processing apparatus of the present invention has communication means for connection with a communications line or the Internet, and this communications means corresponds to the input section of the present invention.
(18) An image-capturing apparatus characterized by comprising:
   a scene-referred raw data generating section to generate scene-referred raw data dependent on the image-capturing characteristics of the image-capturing apparatus by image capturing;
   a reproduction-auxiliary data generating section to generate reproduction-auxiliary data based on which image-capturing characteristic compensation processing is to be applied to the above-mentioned scene-referred image data generated by the above-mentioned scene-referred raw data generating section, so as to generate scene-referred raw data generating section standardized in respect to the scene-referred raw data;
   a image-capturing data generating section to generate image-capturing data representing photographing conditions at a time of photographing; and
   a storage controlling section whereby the above-mentioned reproduction-auxiliary data generated by the above-mentioned reproduction-auxiliary data generating section and image-capturing data generated by the above-mentioned photographing information generating section are both attached to the above-mentioned scene-referred raw data generated by the above-mentioned scene-referred raw data generating section, and are stored into a storage medium.

   Scene-referred raw data dependent on the image-capturing characteristics of the image-capturing apparatus is generated by image capturing. Then reproduction-auxiliary data is generated, and based on this data, image-capturing characteristic compensation processing is to be applied to the scene-referred image data, so as to generate scene-referred raw data standardized in respect to the scene-referred raw data, and image-capturing data. This reproduction-auxiliary data is attached to the scene-referred raw data, and is further stored into the medium. This means omission of processing of conversion to the scene-referred image data inside the image-capturing apparatus. This reduces the processing load and power consumption of the image-capturing apparatus, improves the processing (photographing) capability and increases the number of sheets to be processed (shot) in the battery mode. Further, this ensures the captured image to be recorded on the medium without the information being lost, and permits the image to be transferred to external equipment. Further, the image-capturing apparatus is capable of producing image-capturing data. This allows the image processing apparatus and image recording apparatus according to the present invention to generate visual image referred image data, serving as the output-referred image data, in response to a particular photographing condition.
   The "output-referred image data" (also referred to as "visual image referred image data") denotes digital image data that is used by such a display device as CRT, liquid crystal display and plasma display, or by the output device for generation of a hard copy image on such an outputting medium as silver halide photographic paper, inkjet paper and thermal printing paper. The output-referred image data is provided with "optimization processing" in order to obtain the optimum image on such a display device as CRT, liquid crystal display and plasma display, or such an outputting medium as silver halide photographic paper, inkjet paper and thermal printing paper.
   The "image-capturing data" (also referred to as "image-capturing information data") described in the present invention is a record representing photographing conditions at a time of photographing. It may contain the same as the tag information written into the header of the Exif file. To put it more specifically, it denotes the tag (code) representing the exposure time, shutter speed, f-stop number (F number), ISO sensitivity, brightness value, subject distance range, light source, on/off status of a stroboscopic lamp, subject area, white balance, zoom scaling factor, subject configuration, photographing scene type, the amount of reflected light of the stroboscopic lamp source and color saturation for photographing.
   The above-mentioned "image-capturing data" can be divided into (1) the value captured at a time of photographing by a sensor mounted on the camera for automating the exposure setting and focusing functions of the image-capturing apparatus, (2) the data obtained by processing the value captured by the sensor, and (3) photographing conditions of the camera set on the basis of the value captured by the sensor. In addition to these, it also includes the information manually set by a user on the photographing mode dial (e.g. portrait, sports and macro photographing mode) and the setting switch for forced lighting of a stroboscopic lamp.
   The "image-capturing data" can be arranged to be independently stored on the medium. It is particularly preferred to be recorded in the image file in the form of tag information that can be written on the header.
   When the "image-capturing data" is configured to be stored in the medium independently of the "scene-referred raw data", information for associating "image-capturing data" with "scene-referred raw data" must be attached to both or either of them. Alternatively, a separate status information file containing the information on their relation must be attached to both or either of the two.
(19) An image processing apparatus characterized by comprising:
   an input section to input scene-referred raw data dependent on the image-capturing characteristics of an image-capturing apparatus, reproduction-auxiliary data based on which image-capturing characteristic compensation processing is applied to this scene-referred raw data so as to generate the scene-referred image data standardized in respect to this scene-referred raw data, and image-capturing data representing photographing conditions at a time of photographing;
   a scene-referred image data generating section to generate the above-mentioned standardized scene-referred image data by applying image-capturing characteristic compensation processing to the scene-referred raw data inputted by the above-mentioned input section, based on the reproduction-auxiliary data for application of image-capturing characteristic compensation processing.

   The following data is input; (1) scene-referred raw data dependent on the image-capturing characteristics of an image-capturing apparatus, (2) reproduction-auxiliary data based on which image-capturing characteristic compensation processing is applied to the scene-referred raw data so as to generate the scene-referred image data standardized in respect to the scene-referred raw data, and (3) image-capturing data representing photographing conditions at a time of photographing. Image-capturing characteristic compensation processing is applied to the inputted scene-referred raw data, based on the reproduction-auxiliary data for application of image-capturing characteristic compensation processing, whereby standardized scene-referred image data is produced. Accordingly, the data outputted from the image-capturing apparatus of item 18 can be used for printing in general households and workplaces.
(20) The image recording apparatus of item 17 characterized by further comprising;
   an output-referred image data generating section to generate output-referred image data by the step wherein image processing, to ensure optimization of scene-referred image formed on the outputting medium, is applied to the standardized scene-referred image data generated by the scene-referred image data generating section.

   The image processing apparatus of item 17 generates output-referred image data, based on which an output-referred image is formed on an outputting medium, by applying image processing, for optimization of the output-referred image, to the standardized scene-referred image data. This feature provides the service of yielding the optimized output-referred image data without captured image information being lost, and there is no need of visiting a shop to get this service.
   The "outputting medium" appearing in the present invention is defined as including such a display device as CRT, liquid crystal display and plasma display, or such paper for generation of a hard copy image as silver halide photographic paper, inkjet paper and thermal printing paper.
   The "output-referred image data" (also referred to as "visual image referred image data") denotes digital image data that is used by such a display device as CRT, liquid crystal display and plasma display, or by the output device for generation of a hard copy image on such an outputting medium as silver halide photographic paper, inkjet paper and thermal printing paper. It differs from the above-mentioned "scene-referred raw data" in that "optimization processing" is provided in order to obtain the optimum image, the output-referred image data on such a display device as CRT, liquid crystal display and plasma display, or such an outputting medium as silver halide photographic paper, inkjet paper and thermal printing paper.
   "Optimization processing" is provided to ensure the optimum image on such display device as CRT, liquid crystal display and plasma display, or such an outputting medium as silver halide photographic paper, inkjet paper and thermal printing paper. For example, when display is given on the CRT display monitor conforming to the sRGB standard, processing is provided in such a way that the optimum color reproduction can be gained within the color gamut of the sRGB standard. When the data is to be outputted on silver halide photographic paper, processing is provided in such a way that the optimum color reproduction can be gained within the color gamut of silver halide photographic paper. In addition to compression of the above-mentioned color gamut, compression of gradation from 16 to 8 bits, reduction in the number of output pixels, and processing in response to the output characteristics (LUT) of the output device are also included. Further, it goes without saying that such processing as noise control, sharpening, white balance adjustment, color saturation adjustment or dodging is carried out.
(21) The image recording apparatus of item 19 further comprising;
   an output-referred image data generating section to generate output-referred image data by the step wherein image processing, to ensure optimization of the above-mentioned output-referred image formed on the outputting medium, is applied to the standardized scene-referred image data generated by the scene-referred image data generating section, wherein contents of image processing are determined on the basis of the above-mentioned image-capturing data.

   The image processing apparatus of item 2 generates output-referred image data, based on which an output-referred image is formed on an outputting medium, by applying image processing, for optimization of the output-referred image, to the standardized scene-referred image data. This feature provides the service of yielding the optimized output-referred image data without captured image information being lost, and there is no need of visiting a shop to get this service, wherein contents of image processing are determined on the basis of the above-mentioned image-capturing data.
   The following shows an example of optimizing the output-referred image data using the "image-capturing data":
   "Subject configuration" information allows color saturation enhancement processing to be partially carried out, and permits dodging to be carried out for the scene containing an extensive dynamic range.
   "Photographing scene type" allows special adjustment of color balance to be made by reducing the degree of white balance adjustment is loosened, in photographing of a night view, for example.

   The distance between the photographer and subject can be estimated from the information in the "amount of reflected light from a stroboscopic light source". The result can be effectively utilized in setting the conditions for image processing in order to reduce the white skipping of the skin of the subject, for example.
   The information on "subject type" allows the degree of sharpness to be reduced and processing of smoothening to be enhanced in a people photograph, for example, thereby making the wrinkles on the skin less conspicuous.
   In order to compensate for information on "image-capturing data", "subject configuration", "photographing scene type", "amount of reflected light from a stroboscopic light source" and "subject type", it is possible to use information on "exposure time", "shutter speed", "f-stop number (F number)", "ISO sensitivity", "brightness value", "subject distance range", "light source", "on/off status of a stroboscopic lamp", "subject area", "white balance", "zoom scaling factor", etc. for supplementary purpose. Further, the amount of noise control processing can be adjusted based on the "ISO sensitivity" information, and the "light source" information can be used for readjustment of white balance.
(22) An image recording apparatus characterized by comprising:
   an input section to input scene-referred raw data dependent on the image-capturing characteristics of an image-capturing apparatus and reproduction-auxiliary data based on which image-capturing characteristic compensation processing is applied to this scene-referred raw data so as to generate the scene-referred image data standardized in respect to this scene-referred raw data;
   a scene-referred image data generating section to generate the above-mentioned standardized scene-referred image data by applying image-capturing characteristic compensation processing to the scene-referred raw data inputted by the above-mentioned input section, based on the reproduction-auxiliary data for application of image-capturing characteristic compensation processing;
   an output-referred image data generating section to generate output-referred image data by the step wherein image processing, to ensure optimization of scene-referred image formed on the outputting medium, is applied to the standardized scene-referred image data generated by the scene-referred image data generating section; and
   an image forming section to form an output-referred image on an outputting medium using the output-referred image data generated by the above-mentioned output-referred image data.

   The following data is input; (1) scene-referred raw data dependent on the image-capturing characteristics of an image-capturing apparatus, and (2) reproduction-auxiliary data based on which image-capturing characteristic compensation processing is applied to the scene-referred raw data so as to generate the scene-referred image data standardized in respect to the scene-referred raw data. Image-capturing characteristic compensation processing is applied to the inputted scene-referred raw data, based on the reproduction-auxiliary data for application of image-capturing characteristic compensation processing, whereby standardized scene-referred image data is produced. To carry out optimization for formation of an output-referred image on an outputting medium, image processing is applied to the standardized scene-referred image data, whereby output-referred image data is generated. Accordingly, this feature provides the services of yielding the optimized output-referred image data and prints without captured image information being lost, in the same manner as the services using the conventional Digital Minilab.
(23) An image recording apparatus characterized by comprising:
   an input section to input scene-referred raw data dependent on the image-capturing characteristics of an image-capturing apparatus and reproduction-auxiliary data based on which image-capturing characteristic compensation processing is applied to this scene-referred raw data so as to generate the scene-referred image data standardized in respect to this scene-referred raw data;
   a scene-referred image data generating section to generate the above-mentioned standardized scene-referred image data by applying image-capturing characteristic compensation processing to the scene-referred raw data inputted by the above-mentioned input section, based on the reproduction-auxiliary data for application of image-capturing characteristic compensation processing;
   an output-referred image data generating section to generate output-referred image data by the step wherein image processing, to ensure optimization of the above-mentioned output-referred image formed on the outputting medium, is applied to the standardized scene-referred image data generated by the scene-referred image data generating section, wherein contents of image processing are determined on the basis of the above-mentioned image-capturing data; and
   an image forming section to form an output-referred image on an outputting medium using the output-referred image data generated by the above-mentioned output-referred image data.

The following data is input; (1) scene-referred raw data dependent on the image-capturing characteristics of an image-capturing apparatus, (2) reproduction-auxiliary data based on which image-capturing characteristic compensation processing is applied to the scene-referred raw data so as to generate the scene-referred image data standardized in respect to the scene-referred raw data, and (3) image-capturing data representing photographing conditions at a time of photographing. Image-capturing characteristic compensation processing is applied to the inputted scene-referred raw data, based on the reproduction-auxiliary data for application of image-capturing characteristic compensation processing, whereby standardized scene-referred image data is produced. Output-referred image data is generated by the step wherein image processing for optimization of scene-referred image formed on the outputting medium is applied to the generated scene-referred image data, wherein contents of image processing are determined on the basis of the above-mentioned image-capturing data. The generated output-referred image data is used to form the output-referred image on the outputting medium.

Accordingly, this feature provides the services of yielding the optimized output-referred image data and prints without captured image information being lost, in the same manner as the services using the conventional Digital Minilab.

The image recording apparatus of the present invention can be equipped with a film scanner for inputting the frame image information of the photosensitive material recorded by an analog camera including a color film, color reversal film, black-and-white negative and black-and-white reversal film, or a flat head scanner for inputting the image information reproduced on color paper as silver halide photographic paper, in addition to the mechanism of applying image processing of the present invention to the digital image data obtained by the image-capturing apparatus of the present invention. It can be equipped with means for reading digital image data obtained by a digital camera other than the image-capturing apparatus of the present invention and stored in the known portable "medium" including a compact flash (registered trademark), memory stick, smart media, multi-media card, floppy (registered trademark) disk, photomagnetic storage medium (MO) or CD-R. Alternatively, it can be equipped with processing means for forming an output-referred image on a display device such as a CRT, liquid crystal display and plasma display, and a storage medium of any known type including silver halide photographic paper, inkjet paper and thermal printing paper, by obtaining digital image data from a remote place through communications means such as the Internet.

### BRIEF DESCRIPTION OF THE DRAWINGS

Other objects and advantages of the present invention will become apparent upon reading the following detailed description and upon reference to the drawings in which:
Fig. 1 is a block diagram representing the functional configuration of an image-capturing apparatus 21 embodied in the present invention;
Fig. 2 is a flowchart representing the scene-referred raw data storage processing A to be carried out by a control section 11 shown in Fig. 1;
Fig. 3 is a diagram representing the configuration of the digital image data recorded on the recording medium of a memory device 9 in step S6 shown in Fig. 2;
Fig. 4 is a block diagram representing the functional configuration of an image-capturing apparatus 22 of the present invention;
Fig. 5 is a flowchart representing the scene-referred raw data storage processing B to be carried out by the control section 11 shown in Fig. 4;
Fig. 6 is a diagram representing the data configuration of the digital image data recorded on the recording medium of a storage device 9 in step S17 shown in Fig. 5;
Fig. 7 is a block diagram representing the functional configuration of an image processing apparatus 115 of the present invention;
Fig. 8 is a flowchart representing image data generation processing to be carried out by interconnection among various parts of the image processing apparatus 115 shown in Fig. 7;
Fig. 9 is a diagram representing output data configuration for generating scene-referred image data d4 and outputting it to the memory device 110 when a file having data configuration of Fig. 3 has been inputted from the input section 101 in the image processing apparatus 115 shown in Fig. 7;
Fig. 10 is a diagram representing output data configuration for generating scene-referred image data d4 and outputting it to the memory device 110 when a file having data configuration of Fig. 6 has been inputted from the input section 101 in the image processing apparatus 115 shown in Fig. 7;
Fig. 11 is an external perspective view representing an image recording apparatus 201 of the present invention;
Fig. 12 is a diagram representing the internal configuration of the image recording apparatus 201 shown in Fig. 11;
Fig. 13 is a block diagram representing the functional configuration of an image processing apparatus 270 shown in Fig. 12; and
Fig. 14 is a flowchart representing image data formation processing to be carried out by interconnection among various parts of the image recording apparatus 201 shown in Fig. 11.

### DETAILED DESCRIPTION OF THE PREFERRED EMBODIMENT

Referring to drawings, the following describes the preferred embodiments of the present invention:

### [Configuration of image-capturing apparatus 21]

The configuration will be described first.

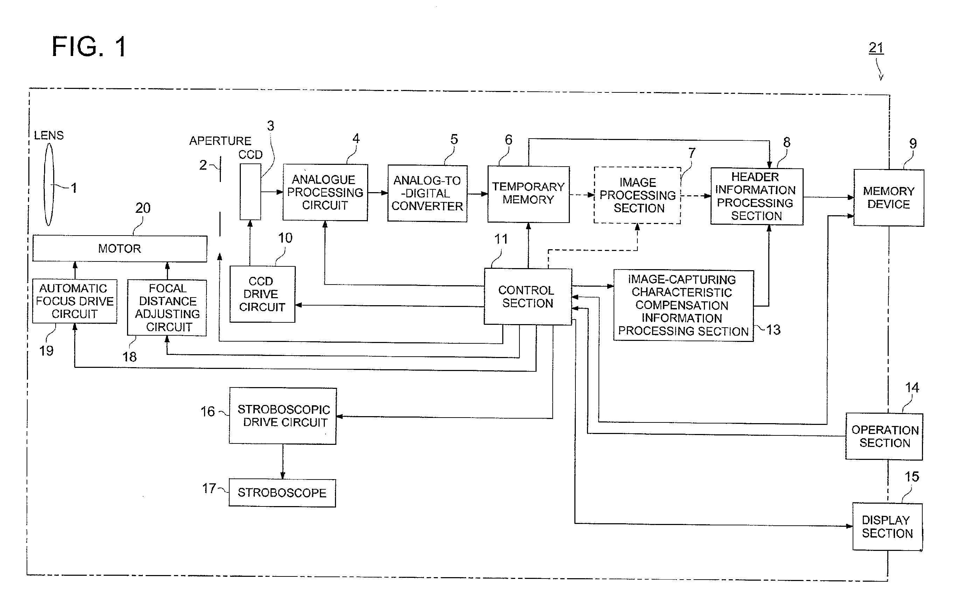

Fig. 1 is a block diagram representing the functional configuration of an image-capturing apparatus 21 of the present invention. As shown in Fig. 1, the image-capturing apparatus 21 comprises a lens 1, aperture 2, CCD 3, analog processing circuit 4, analog-to-digital converter 5, temporary memory 6, image processing section 7, header information processing section 8, Memory device 9, CCD drive circuit 10, control section 11, mage-capturing characteristic compensation information processing section 13, operation section 14, display section 15, stroboscopic drive circuit 16, stroboscope 17, focal distance adjusting circuit 18, automatic focus drive circuit 19, motor 20, etc.

The optical system of the image-capturing apparatus 21 comprises a lens 1, aperture 2 and CCD (solid image-capturing device) 3.

The lens 1 adjusts the focus to form the optical image of a subject. The aperture 2 adjusts the amount of light of the ray bundle having passed through the lens 1. The CCD3 provides photoelectric conversion in such a way that the light of the subject whose image has been formed on the light receiving surface by means of the lens 1 is converted into electric signals (image-capturing signals) in the amount conforming to the amount of incoming light for each sensor. The CCD3 controls the timing pulse produced from the CC D drive circuit 10, whereby image-capturing signals are sequentially output to the analog processing circuit 4.

In response to image-capturing signals inputted from the CCD3, the analog processing circuit 4 carries out processing of amplification of the R, G and B signals and noise reduction. Processing by this analog processing circuit 4 is turned on or off in response to the operation signal from the operation section 14 via the control section 11.

The analog-to-digital converter 5 converts into the digital image data the image-capturing signal inputted from the analog processing circuit 4.

The temporary memory 6 consists of a buffer memory or. the like, and temporarily stores the digital image data outputted from the analog-to-digital converter 5.

The image processing section 7 performs processing of image size change, trimming, aspect conversion in addition to processing of the digital image data gradation correction used for display in the display section 15, spectral sensitivity stroke correction, dark current noise control, sharpening, white balance adjustment and color saturation adjustment. Processing by the image processing section 7 is turned on or off in response to the operation signal from the operation section 14 via the control section 11.

The header information processing section 8 process the digital image data stored in the temporary memory 6 in such a way that image-capturing characteristic compensation data d1 generated by the image-capturing characteristic compensation information processing section 13 is written as header information.

The memory device 9 is composed of nonvolatile semiconductor memory and others, and comprises such a recording media as memory card for recording the digital image data gained by photographing and a readable memory retaining the control program of the image-capturing apparatus 21.

The CCD drive circuit 10 issues timing pulses based on the control signal produced from the control section 11 and performs drive control of the CCD3.

The control section 11 is composed of the CPU (Central Processing Unit), and reads the control program of the image-capturing apparatus 21 stored in the memory device 9. In conformity to the program having been read out, it controls the image-capturing apparatus 21 as a whole. To put it more specifically, the control section 11 controls the automatic focus drive circuit 19 that controls the motor 20 for adjusting the focal distance and focus of lens 1 in response to the operation signal from the operation section 14, focal distance adjusting circuit 18, CCD drive circuit 10, analog processing circuit 4, temporary memory 6, image processing section 7, operation section 14, display section 15, stroboscopic drive circuit 16 and image-capturing characteristic compensation information processing section 13, whereby photographing is carried out.

When the output of the scene-referred raw data has been specified by the operation section 14, the control section 11 performs processing of scene-referred raw data storage to be described later. Processing of signal amplification and noise reduction by the analog processing circuit 4 and processing by the image processing section 7 are omitted, and image-capturing characteristic compensation data d1 as header information is written into the recording medium of the memory device 9. At the same time, the photographed digital image data is recorded as scene-referred raw data d2. The control section 11 has the functions of scene-referred raw data generating means and recording control means described in the Claims of the present invention.

When the scene-referred raw data d2 that is not processed by the analog processing circuit 4 and image processing section 7 under the control of the control section 11 is recorded on the recording medium of the memory device 9, the image-capturing characteristic compensation information processing section 13, in response to the operation signal coming from the operation section 14, generates the image-capturing characteristic compensation data d1 as the information required to convert the scene-referred raw data d2 into the scene-referred image data d4 of standardized color space such as RIMM RGB and ERIMM RGB, and outputs it to the header information processing section 8. The image-capturing characteristic compensation data d1 corresponds to the "reproduction-auxiliary data based on which image-capturing characteristic compensation processing is applied so as to generate the standardized scene-referred image data" described in the Claims of the present invention. The image-capturing characteristic compensation information processing section 13 has a function of a reproduction-auxiliary data generating section described in Claims of the present invention.

The operation section 14 is provided with function buttons such as a release button, power ON/OFF button and zoom button, and cursor keys (not illustrated). The operation signals corresponding to buttons and keys are output to the control section 11 as input signals. In the present embodiment, the operation section 14 has a function button for specifying the output of the scene-referred raw data.

In response to the control signal coming from the control section 11, the display section 15 displays digital image data and the information for the user of the image-capturing apparatus 21 to verify the settings and conditions for photographing.

In response to the control signal coming from the control section 11, the stroboscopic drive circuit 16 drives and controls the stroboscope 17 to make it emit light when the brightness of the subject is low.

The stroboscope 17 boosts battery voltage to a predetermined level and stores it in the capacitor as electrical charge. It is driven by the stroboscopic drive circuit 16, thereby allowing an X-ray tube to emit light by electrical charge stored in the capacitor. Thus, supplementary light is applied to the subject.

In response to the control signal coming from the control section 11, the focal distance adjusting circuit 18 moves the lens 1 to control the motor 20 for adjusting the focal distance.

In response to the control signal coming from the control section 11, the automatic focus drive circuit 19 moves the lens 1 to control the motor 20 for adjusting the focus.

### [Operation of image-capturing apparatus 21]

The following describes the operations:

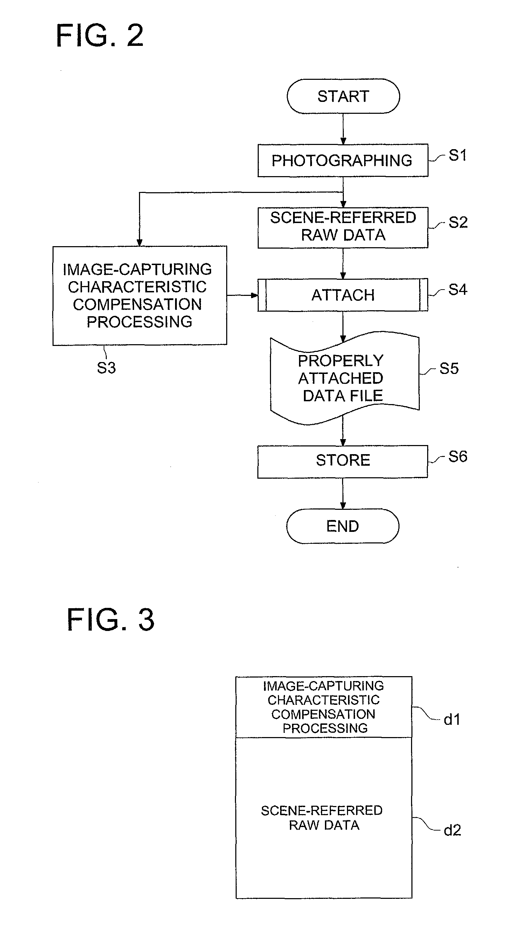

Fig. 2 is a flowchart representing the scene-referred raw data storage processing A to be carried out under the control of the control section 11 when the output due to scene-referred raw data of the photographed digital image data is set by the operation section 14 and the release switch is pressed.

The following describes the scene-referred raw data storage processing A with reference to Fig. 2:

When the release button of the operation section 14 has been pressed, the control section 11 controls various sections to carry out photographing (Step S1). The image-capturing signal obtained from the CCD3 is converted into the digital image data by the analog-to-digital converter 5, and scene-referred raw data d2 is generated (Step S2). Under the control of the control section 11, the image-capturing characteristic compensation information processing section 13 generates the data required to apply image-capturing characteristic compensation processing to the generated scene-referred raw data d2, namely image-capturing characteristic compensation data d1 (Step S3).

After the scene-referred raw data d2 and image-capturing characteristic compensation data d1 have been generated, the header information processing section 8 records and attaches the image-capturing characteristic compensation data d1 as tag information to the file header of the scene-referred raw data d2 under the control of the control section 11 (Step S4), whereby a properly attached data file is created (Step S5). This properly attached data file is recorded and stored in the recording medium of the memory device 9 removably arranged on the image-capturing apparatus 21 (Step S6).

Fig. 3 is a diagram representing the configuration of the digital image data recorded on the recording medium of a memory device 9 in step S6. As shown in Fig. 3, the photographed digital image data is recorded as scene-referred raw data d2 and image-capturing characteristic compensation data d1 is recorded in this header area. This recording medium is taken out of the image-capturing apparatus 21 and is mounted on an external apparatus such as image processing apparatus and image recording apparatus, whereby the scene-referred raw data d2 and image-capturing characteristic compensation data d1 can be output to these external apparatuses.

As described above, the image-capturing apparatus 21 shown in Fig. 1 makes it possible to output:
(1) scene-referred raw data d2 as an direct raw output signal of the image-capturing apparatus faithfully recording the information of a subject, wherein there is omission of image processing of intentionally modifying the contents of data to improve the effect in viewing the image such as conversion of gradation, and enhancement of sharpness and color saturation, and the processing of mapping signal enhancement of each color channel based on the spectral sensitivity inherent to the image-capturing device, into the above-mentioned standardized color space such as RIMM RGB and sRGB; and
(2) the sufficient data for carrying out image-capturing characteristic compensation processing wherein the spectral sensitivity inherent to the image-capturing device or the matrix coefficient to be used for conversion into the standardized color space such as RIMM RGB and sRGB are written. At the same time, the above-mentioned image-capturing apparatus 21 omits processing of conversion into the scene-referred image data in the image-capturing apparatus, thereby reducing the processing load and power consumption of the image-capturing apparatus, improving the processing (photographing) capability and increasing the number of sheets to be processed (shot) in the battery mode. [Configuration of image-capturing apparatus 22]

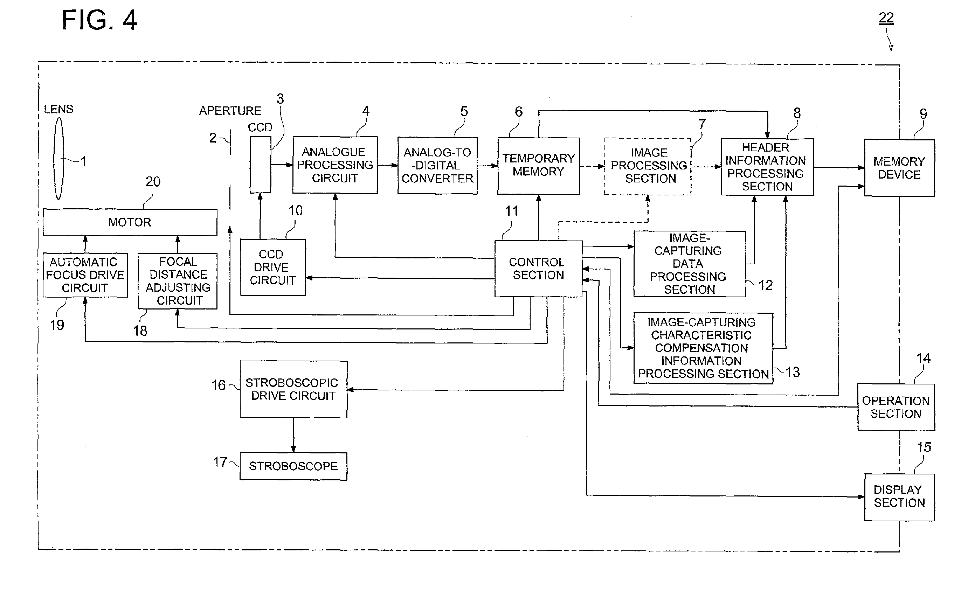

The following describes the image-capturing apparatus 22 characterized in that an image-capturing information data processing section 12 is added to the configuration of the image-capturing apparatus 21 in order to get the more preferred image where digital image data is outputted. Fig. 4 is a block diagram representing the functional configuration of an image-capturing apparatus 22.

The image-capturing information data processing section 12 generates an image-capturing information data d3. The image-capturing information data d3 includes:
information directly related to the camera such as camera name and code number;
information on photographing conditions such as exposure time, shutter speed, f-stop number (F number), ISO sensitivity, brightness value, subject distance range, light source, on/off status of a stroboscopic lamp, subject area, white balance, zoom scaling factor, subject configuration, photographing scene type, the amount of reflected light of the stroboscopic lamp source and color saturation for photographing; and
information on the type of the subject. The image-capturing information data processing section 12 has the function of the image-capturing information data generating means described in the Claims of the present invention.

### [Operation of image-capturing apparatus 22]

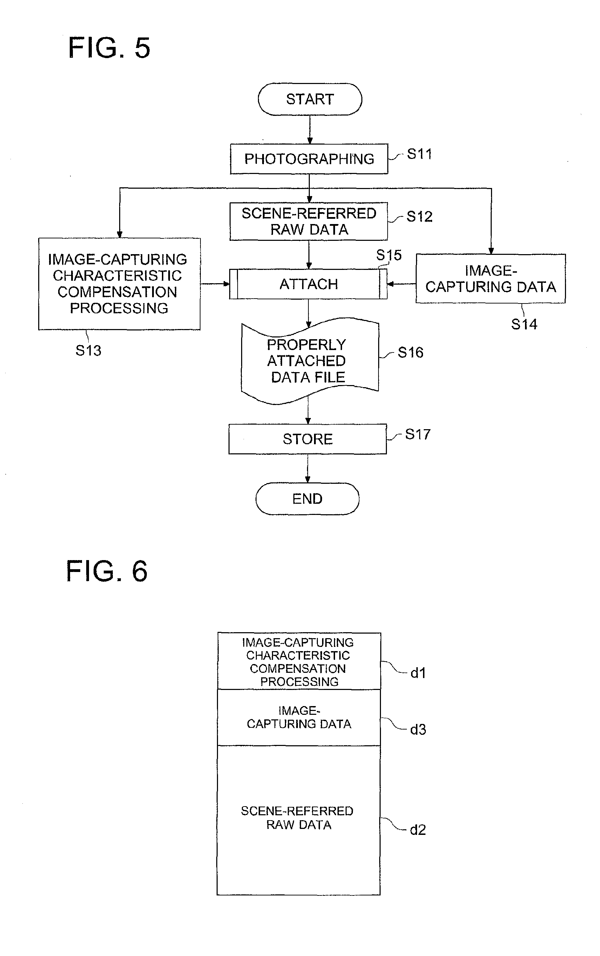

Fig. 5 is a flowchart representing the scene-referred raw data storage processing B to be carried out under the control of the control section 11 when the output based on the scene-referred raw data of the photographed digital image data is set by the operation section 14 in the image-capturing apparatus 22 of Fig. 4 and the release switch is depressed. The following describes the scene-referred data storage processing B with reference to Fig. 5:

When the release button of the operation section 14 is depressed, the control section 11 control various sections to start photographing (Step S11). The image-capturing signal obtained from the CCD3 is converted into the digital image data by the analog-to-digital converter 5 and the scene-referred raw data d2 is generated (Step S12). Image-capturing characteristic compensation data d1 is generated by the image-capturing characteristic compensation information processing section 13, and image-capturing information data d3 is generated by the image-capturing information data processing section 12 (Step S14).

After scene-referred raw data d2, image-capturing characteristic compensation data d1 and image-capturing information data d3 have been generated, image-capturing characteristic compensation data d1 and image-capturing information data d3 are recorded and attached as tag information to the header file of the scene-referred raw data d2 (Step S15),
whereby a properly attached data file is created (Step S16). This properly attached data file is recorded and stored in the recording medium of the memory device 9 removably arranged on the image-capturing apparatus 22 (Step S17).

Fig. 6 is a diagram representing the data configuration of the digital image data recorded on the recording medium of a storage device 9 in step S17. As shown in Fig. 6, the photographed digital image data is recorded as scene-referred raw data d2, and image-capturing characteristic compensation data d1 and image-capturing information data d3 are recorded in the header area. When this recording medium is removed from the image-capturing apparatus 22 and is mounted on the external device such as image processing apparatus and image recording apparatus, scene-referred raw data d2, image-capturing characteristic compensation data d1 and image-capturing information data d3 can be output to these external devices.

As described above, in addition to the effect of the image-capturing apparatus 21 of Fig. 1, the image-capturing apparatus 22 of Fig. 4 is capable of outputting the data that allows generation of the output-referred image data in response to a particular photographed condition in the external output apparatus.

### [Configuration of image processing apparatus 115]

The following describes the embodiment of the image processing apparatus of the present invention:

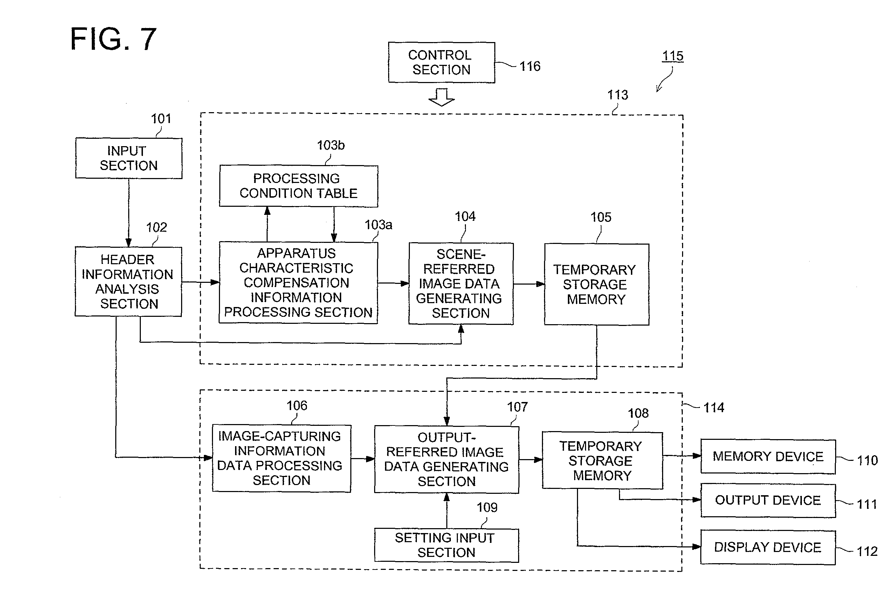

Fig. 7 is a block diagram representing the functional configuration of an image processing apparatus 115 of the present invention. As shown in Fig. 7, the image processing apparatus 115 comprises:
   an input section 101,
   a header information analysis section 102,
   an image-capturing characteristic compensation information processing section 113 for generating by the step wherein image-capturing characteristic compensation processing is applied to the scene-referred raw data d2 based on the image-capturing characteristic compensation data d1, and
   an optimization processing section 114 for generating the output-referred image data d5 by the step where optimization processing is applied to the scene-referred image data d4 generated by the image-capturing characteristic compensation information processing section 113. The image-capturing characteristic compensation information processing section 113 and optimization processing unit 114 are each connected with the header information analysis section 102. The optimization processing unit 114 is further made ready for connection with a memory device 110, output device 111 and display device 112. These components are operated under the control of the control section 116 comprising a CPU and others.

The input section 101 has a recording medium mounting section (not illustrated). When the recording medium for recording the file (see Figs. 3 and 6) of the data photographed by the image-capturing apparatuses 21 and 22 is installed on this mounting section, the input section 101 reads the recorded data file, and outputs it to the header information analysis section 102. The present embodiment will be described on the assumption that the input section 101 reads data from the mounted recording media. It is also possible to arrange such a configuration that the data communications cable and wired or wireless communications means are provided, and data is input via such communications means. The input section 101 has a function of the image processing apparatus input means described in Claims of the present invention.

The header information analysis section 102 analyzes the data inputted from the input section 101, and divides it into scene-referred raw data d2, image-capturing characteristic compensation data d1 attached thereto and image-capturing information data d3. Then it outputs image-capturing characteristic compensation data d1 to the apparatus characteristic compensation information processing section 103a, and scene-referred raw data d2 to the image-capturing information data processing section 106.

As shown in Fig. 7, the image-capturing characteristic compensation information processing section 113 has a processing condition table 103b, a scene-referred image data generating section 104 and a temporary storage memory 105. The image-capturing characteristic compensation information processing section 113 has a function of the scene-referred image data generating section of the present invention.

When the image-capturing characteristic compensation data d1 is inputted from the header information analysis section 102, the apparatus characteristic compensation information processing section 103a determines the conditions for generating the scene-referred image data d4 by reference to the processing condition table 103b. The processing condition table 103b associates processing conditions for generating scene-referred image data d4 for each characteristic of the image-capturing apparatus and stores them in the memory.

The scene-referred image data generating section 104 applies image-capturing characteristic compensation processing to scene-referred raw data d2 inputted from the header information analysis section 102, based on the generating conditions determined by the apparatus characteristic compensation information processing section 103a. It generates the standardized scene-referred image data d4 independent of the image-capturing characteristic, and outputs it to the temporary storage memory 105. To put it more specifically, image-capturing characteristic compensation processing comprises at least the processing of mapping the signal intensity of the signal of each color channel based on the spectral sensitivity inherent to the image-capturing device of the image-capturing apparatus having generated the scene-referred raw data d2, into the standardized color space such as RIMM RGB and ERIMM RGB. The temporary storage memory 105 temporarily stores the scene-referred image data d4 generated by the scene-referred image data generating section 104.

As shown in Fig. 7, the optimization processing section 114 comprises an output-referred image data generating section 107, temporary storage memory 108 and setting input section 109. The optimization processing section 114 has a function of the scene-referred image data generating section of the image processing apparatus in Claims of the present invention.

The image-capturing information data processing section 106 determines the conditions for generating the output-referred image data d5 in conformity to photographing conditions, based on the image-capturing information data d3 inputted from the header information analysis section 102.

When operation information on the types of memory device 110 for outputting the digital image data generated by the image processing apparatus 115, output device 111 and display device 112 has been inputted, the setting input section 109 outputs this operation information to the memory device 110.

The output-referred image data generating section 107 reads the scene-referred image data d4 from the temporary storage memory 105, and applies optimization processing for getting the optimum image on the output destination, based on the conditions for generating the output-referred image data d5 determined by the image-capturing information data processing section 106 and the operation information on the types of memory device 110 having been inputted from the setting input section 109, output device 111 and display device 112. Then the output-referred image data generating section 107 generates the output-referred image data d5 and outputs it to the temporary storage memory 108 together with operation information. Optimization processing includes, for example, compression to the color gamut of the output destination, compression of gradation from 16 to 8 bits, reduction in the number of output pixels and processing of the output device and display device to conform to output characteristics (LUT). Further, image processing such as noise control, sharpening, color balance adjustment, color saturation adjustment and dodging are also included.

The temporary storage memory 108 outputs the output-referred image data d5 inputted from the output-referred image data generating section 107 under the control of the control section 116, to any one of the memory device 110, output device 111 and display device 112 according to the operation information from the setting input section 109.

### [Operation of image processing apparatus 115]

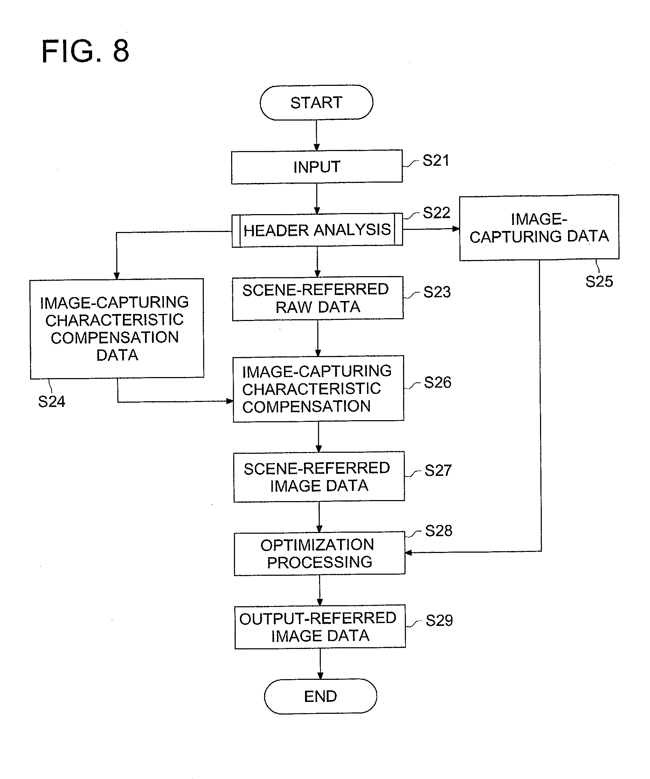

Fig. 8 is a flowchart representing image data generation processing to be carried out by interconnection among various parts of the image processing apparatus 115. The following describes the operation of image processing apparatus 115 with reference to drawings:
When the recording media having a data structure given in Fig. 3 or 6 has been mounted in position, the digital image data file recorded in the recording medium is inputted by the input section 101 (Step S21). The contents of the inputted digital image data are analyzed by the header information analysis section 102 (Step S22) and are divided into scene-referred raw data d2 (Step S23), image-capturing characteristic compensation data d1 (Step S24) and image-capturing information data d3 (Step S25). Scene-referred raw data d2 and image-capturing characteristic compensation data d1 are output to the image-capturing characteristic compensation information processing section 113, and the image-capturing information data is outputted to the optimization processing section 114.

When image-capturing characteristic compensation data d1 is inputted to the image-capturing characteristic compensation information processing section 113, the processing condition table 103b is referenced by the apparatus characteristic compensation information processing section 103a to determine the processing conditions for generating scene-referred image data d4. Scene-referred raw data d2 is subjected to image-capturing characteristic compensation information processing through the scene-referred image data generating section 104 based on these conditions (Step S26). Then scene-referred image data d4 is generated and is outputted to the optimization processing section 114 (Step S27).

When the image-capturing information data d3 is inputted to the optimization processing section 114, processing conditions for generating output-referred image data d5 in conformity to photographing conditions are determined by the image-capturing information data processing section 106, based on the image-capturing information data d3. The scene-referred image data d4 entered from the image-capturing characteristic compensation information processing section 113 is subjected to optimization processing in conformity to the output destination through the output-referred image data generating section 107, based on the processing conditions determined by the output-referred image data generating section 107 and image-capturing information data processing section 106, and the operation information inputted from the setting input section 109 (Step S28). Then output-referred image data d5 is generated and is outputted by the setting input section 109 (Step S29).

It is also possible to arrange the following configuration: The setting input section 109 is provided with a function of setting the output of scene-referred image data d4. When the output of the scene-referred image data d4 has been set by the setting input section 109, the optimization processing by the optimization processing section 114 is omitted, and the scene-referred image data d4 generated by the image-capturing characteristic compensation information processing section 113, with image-capturing characteristic compensation data d1 and image-capturing information data d3 attached to its header area, is formed into a data file, which is then'outputted to the memory device 110.

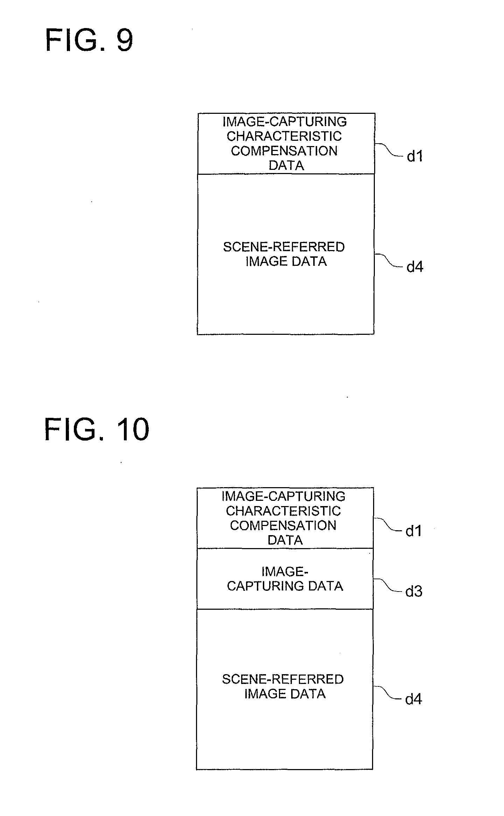

Fig. 9 is a diagram representing output data configuration for generating scene-referred image data d4 and outputting it to the memory device 110 when a file having data configuration of Fig. 3 has been inputted from the input section 101. Fig. 10 is a diagram representing output data configuration for generating scene-referred image data d4 and outputting it to the memory device 110 when a file having data configuration of Fig. 6 has been inputted from the input section 101. When such a memory device 110 is mounted on an external apparatus such as a display device and image recording apparatus, the scene-referred image data d4 and image-capturing characteristic compensation data d1 (and image-capturing information data d3) can be outputted to the external apparatus, which is allowed to carry out optimization processing in conformity to its own apparatus conditions.

As described above, scene-referred image data d4 is generated from the scene-referred raw data d2 outputted from the image-capturing apparatuses 21 and 22 by the image processing apparatus 115. Optimized output-referred image data d5 can be created without the image-capturing information being lost, so that it is outputted onto such a display device as CRT, liquid crystal display and plasma display, and a storage medium of any known type such as paper for generation of hardcopy images including silver halide photographic paper, inkjet paper and thermal printing paper.

### [Configuration of image recording apparatus 201]

The following describes the preferred embodiments of the image recording apparatus of the present invention:

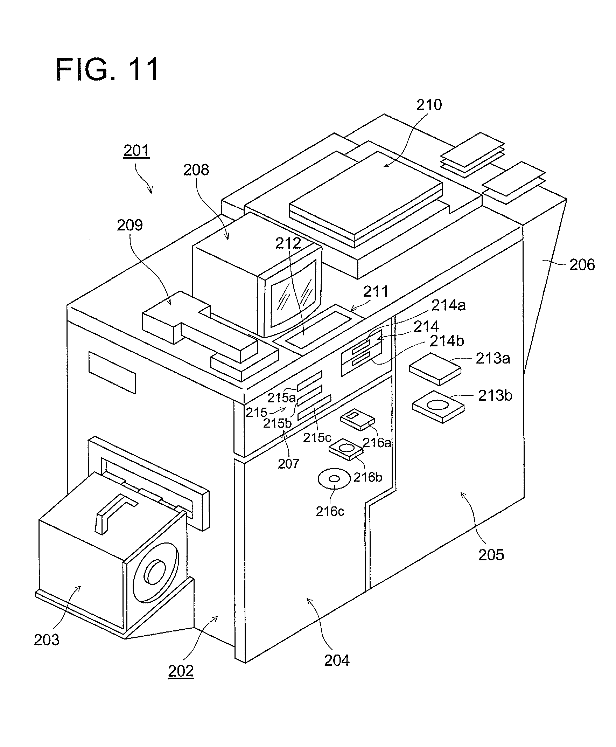

Fig. 11 is an external perspective view representing an image recording apparatus 201 of the present invention. The image recording apparatus 201 in the present embodiment provides an example of the image recording apparatus equipped with a CRT display monitor as a display device and an output device using silver halide photographic paper as an output media.

In the image recording apparatus 201, a magazine loading section 203 is installed on the left side surface of the main unit 202. An exposure processing section 204 for causing the silver halide photographic paper as an output medium to be exposed to light, and a print creating section 205 for creating a print by developing and drying the exposed silver halide photographic paper are installed inside the main unit 202. The created print is ejected onto the tray 206 mounted on the right side of the main unit 202. Further, a control section 207 is provided on the upward position of the exposure processing section 204 inside the main unit 202.

A CRT 208 is arranged on the top of the main unit 202. It has the function of display means for displaying on the screen the image of the image information to be printed. A film scanner 209 as a transparent document reader is mounted on the left of the CRT 208, and a reflected document input apparatus 210 is arranged on the right.

One of the documents read from the film scanner 209 and reflected document input apparatus 210 is a photosensitive material. The photographic material includes a color negative, color reversal film, black-and-white negative, black-and-white reversal film. Frame image information captured by an analog camera is recorded on the photographic material. The film scanner of the film scanner 209 converts this recorded frame image information into digital image data and creates frame image data. When the photographic material is color paper as silver halide photographic paper, it can be converted into frame image data by the flat head scanner of the reflected document input apparatus 210.

An image reader 214 is mounted where the control section 207 of the main unit 202 is located. The image reader 214 is provided with a PC card adaptor 214a and a floppy (registered trademark) disk adaptor 214b to ensure that a PC card 213a and floppy disk 213b can be inserted into position. The PC card 213a has a memory where multiple items of frame image data obtained by photographing with a digital camera are stored. The floppy disk 213b stores multiple items of frame image data obtained by photographing with a digital camera.

An operation section 211 is arranged forwardly of the CRT 208. This operation section 211 is equipped with an information input section 212, which consists of a touch panel and others.

The recording medium storing the frame image data of the present invention other than the above-mentioned data includes a multimedia card, memory stock, MD data and CD-ROM. The operation section 211, CRT 208, film scanner 209, reflected document input apparatus 210 and image reader 214 is mounted integrally on the main unit 202. Any one of them can be installed as a separate unit.

An image write section 215 is mounted where the control section 207 of the main unit 202 is located. The image write section 215 is equipped with a floppy disk adaptor 215a, MO adaptor 215b, and optical disk adaptor 215c so that an FD 216a, MO 216b and optical disk 216c can be inserted into position, and Image information can be written on the image recording medium.

Further, the control section 207 has means for communication (not illustrated). It receives image data representing the captured image and print instruction directly from another computer in the facilities or a remote computer through the Internet, and is capable of functioning as a so-called network image output apparatus.

### [Internal configuration of image recording apparatus 201]

The following describes the internal structure of the image recording apparatus 201:
the present invention;

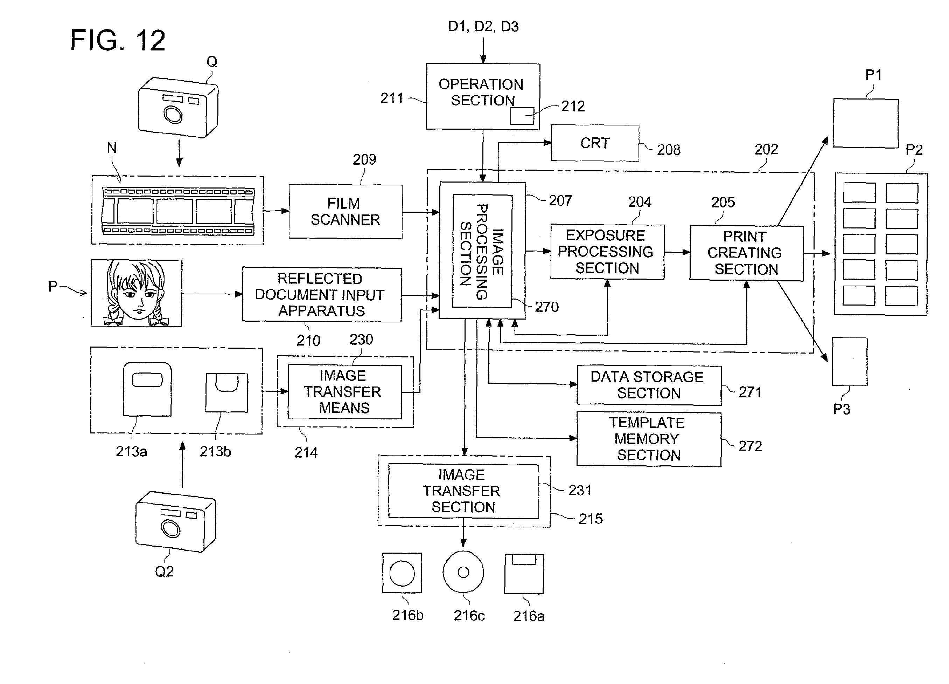

Fig. 12 is a diagram representing the internal configuration of the image recording apparatus 201.

The control section 207 of the image recording apparatus 201 comprises a CPU (Central Processing Unit) and memory section. The CPU reads the various types of control programs stored in the memory section and centrally controls the components constituting the image recording apparatus 201 in conformity to the control program.

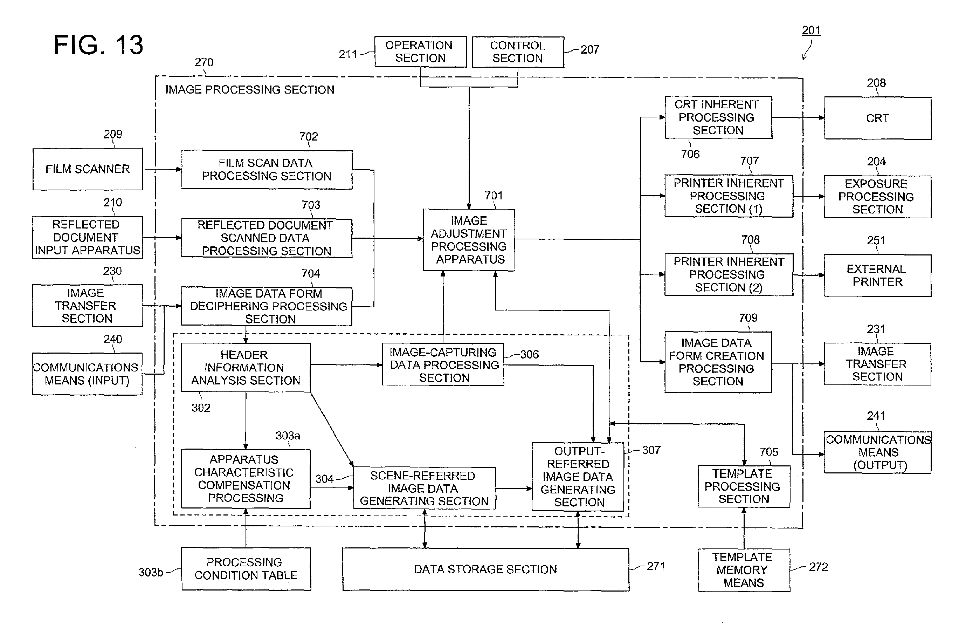

The control section 207 has an image processing section 270. Image processing is applied to:
the image data gained by allowing the document image to be read by the film scanner 209 and reflected document input apparatus 210 based on the input signal from the information input means 12 of the operation section 211;
the image data read from the image reader 214; and
the image data inputted from the external equipment through and communications means (input) 240 (illustrated in Fig. 13). In the image processing apparatus 270, conversion processing in conformity to the output format is applied to the image data subjected to image processing, and the result is output as prints P1, P2 and P3 or by the monitor 208, image write section 215 and communications section (output) 241.

The operation section 211 is provided with an information input section 212. The information input section 212 comprises a touch panel, and the signal of depressing the information input section 212 is outputted to the control section 207 as an input signal. It is also possible to arrange such a configuration that the operation section 211 is equipped with a keyboard or mouse.

The film scanner 209 reads the frame image data from the developed negative film N gained by an analog camera. From the reflected document input apparatus 210, the film scanner 209 reads the frame image data from the print P subjected to the processing of development with the frame image printed on the color paper as silver halide photographic paper.

The image reader 214 has a function of reading the frame image data of the PC card 213a and floppy disk 213b photographed and stored by the digital camera. Namely, the image reader 214 is equipped with a PC card adaptor and floppy disk adaptor as image transfer sections 230. It reads the frame image data recorded on the PC card 213a and floppy disk 213b mounted on the floppy disk adaptor 214b, and transfers it to the control section 207. A PC card reader or a PC cad slot, for example, is used as the PC card adaptor 214a.

The data storage section 271 memorizes image information and its corresponding order information (information on the number of prints to be created from the image of a particular frame) and stores them sequentially.

The template memory section 272 memorizes the sample image data (data showing the background image and illustrated image) corresponding to the types of information on sample identification D1, D2 and D3, and memorizes at least one of the data items on the template for setting the composite area with the sample image data. When a predetermined template is selected from among multiple templates previously memorized in the template memory section 272 by the operation by the operator (based on the instruction of a client), the control section 207 performs merging between the frame image information and the selected template. When the types of information on sample identification D1, D2 and D3 have been specified by the operation by the operator (based on the instruction of a client), the sample image data is selected in conformity to the specified types of information on sample identification D1, D2 and D3. Merging of the selected sample image data, image data ordered by a client and/or character data is carried out and, as a result, a print in conformity to the sample image data desired by the client is created. Merging by this template is performed by the widely known chromakey technique.

Sample identification information is not restricted to three types of information on sample identification D1, D2 and D3. More than three types or less than three types can be used. The types of information on sample identification D1, D2 and D3 for specifying the print sample are arranged to be inputted from the operation section 211. Since the types of information on sample identification D1, D2 and D3 are recorded on the sample or order sheet, they can be read by the reading section such as an OCR. Alternatively, they can be inputted by the operator through a keyboard.

As described above, sample image data is recorded in response to sample identification information D1 for specifying the print sample, and the sample identification information D1 for specifying the print sample is inputted. Based on the inputted sample identification information D1, sample image data is selected, and the selected sample image data and image data and/or character data based on the order are merged to create a print according to the specified sample. This procedure allows a user to directly check full-sized samples of various dimensions before placing an order. This permits wide-ranging user requirements to be satisfied.

The first sample identification information D2 for specifying the first sample, and first sample image data are memorized; alternatively, the second sample identification information D3 for specifying the second sample, and second sample image data are memorized. The sample image data selected on the basis of the specified first and second sample identification information D2 and D3, and ordered image data and/or character data are merged with each other, and a print is created according to the specified sample. This procedure allows a greater variety of images to be created, and permits wide-ranging user requirements to be satisfied.

In the exposure processing section 204, the photographic material is exposed and an image is formed thereon in conformity to the output image data generated by image processing of image data by the image processing section 270. This photographic material is sent to the print creating section 205. The print creating section 205 develops ad dries the exposed photographic material to create prints P1, P2 and P3. Print P1 is available in a service size, high-vision size or panorama size. Print P2 is an A4-sized print, print P3 is a business card-sized print (2 in. x 3 in.).

Print sizes are not restricted to P1, P2 and P3. Other sized prints can also be used.

The monitor 208 comprises a CRT, LCD and others. It displays the image information inputted from the control section 207.

The image write section 215 is provided with a floppy disk adaptor 215a, MO adaptor 215b, and optical disk adaptor 215c as an image transfer section 231 so that the FD 216a, MO 216b and optical disk 216c can be inserted. This allows the image data to be written on the image recording medium.

Using the communications means (input) 240 (illustrated in Fig. 13), the image processing apparatus 270 receives image data representing the captured image and printing and other work instruction directly from another computer in the facilities or from a remote computer through Internet, and is cable of performing image processing and printing in the remote control mode.

Using the communications means (input) 240 (illustrated in Fig. 13), the image processing apparatus 270 is capable of sending the image data representing the photographed image after image processing of the present invention has been applied, and accompanying order information, to another computer in the facilities or a remote computer through Internet.

As described above, the image recording apparatus 201 comprises:
an input section for capturing the digital image data of various types and image information obtained by dividing the image document and measuring a property of light;
an image processing section for processing the information on the input image captured from this input section in such a way that this image will provide a favorable impression when viewed on the outputting medium, by getting or estimating the information on "size of the output image" and "size of the major subject in the output image";
an image outputting section for displaying or printing out and measuring a property of light, or writing it on the image recording medium;
a communications section (output) for sending the image data and accompanying order information to another computer in the facilities through a communications line or a remote computer through Internet.

### [Configuration of image processing apparatus 270]

Fig. 13 is a block diagram representing the functional configuration of an image processing apparatus 270 of the present invention. The image data inputted from the film scanner 209 is subjected to calibration inherent to the film scanner, negative/positive reversal of a negative document, removal of dust and scratch, gray balance adjustment, contrast adjustment, removal of granular noise an enhancement of sharpness in the film scan data processing section 702, and is sent to the image adjustment processing section 701. The film size, negative/positive type, information on the major subject recorded optically or magnetically on the film and information on photographing conditions (e.g. information described on the APS) are outputted to the image adjustment processing apparatus 701.

The image data inputted from the reflected document input apparatus 210 is subjected to calibration inherent to a reflected document input apparatus negative/positive reversal of a negative document, removal of dust and scratch, gray balance adjustment, contrast adjustment, removal of granular noise an enhancement of sharpness in the film scan data processing section 702 in the reflected document scanned data processing section 703, and the result is outputted to the image adjustment processing section 701.

The image data inputted from the image transfer section 230 and communications section (input) is subjected to decompression of the compressed symbols or conversion of the color data representation method, as required, according to the form of the data in the image data form deciphering processing section 704. It is converted into the data format suitable for numerical computation inside the image processing section 270 and is outputted to the image adjustment processing apparatus 701. The image data form deciphering processing section 704 determines whether or not the image data of the format according to the image-capturing apparatuses 21 and 22 has been inputted from the image transfer section 230 and communications means (input) 240, and outputs the inputted image data to the header information analysis section 302. The header information analysis section 302 analyzes the image-capturing characteristic compensation data d1 and image-capturing information data d3 from the inputted image data.

The image transfer section 230 and communications means (input) 240 have the function as an input section for the image recording apparatus described in the Claims of the present invention.

Designation of the size of output image is inputted from the operation section 211. Further, if there is designation of the size of the output image sent to the communications means (input) 240 or the output image embedded in the header/tag information of the image data obtained through the image transfer section 230, the image data form deciphering processing section 704 detects the information and sends it to the image adjustment processing apparatus 701.

The image-capturing characteristic compensation data d1 analyzed by the header information analysis section 302 is outputted to the apparatus characteristic compensation processing 303a. The image processing conditions are determined in conformity to the processing condition table 303b. The determined image processing conditions are applied to the image data in the scene-referred image data generating section 304, and scene-referred image data d4 is generated. The scene-referred image data generating section 304 has a function as the scene-referred image data generating section of the image recording apparatus described in the Claims of the present invention.

The image-capturing information data d3 analyzed by the header information analysis section 302 is outputted to the image-capturing data processing section 306, and the image processing conditions for generation of output-referred image data d5 is determined.

Based on the instruction from the operation section 211 and control section 207, image adjustment processing apparatus 701 transfers to the output-referred image data generating section 307 the image processing conditions for creating the output-referred image data d5 applied to the device and outputting medium at the output destination.

According to the image processing conditions created by the image-capturing data processing section 306 and image processing conditions sent from the image adjustment processing apparatus 701, the output-referred image data generating section 307 generates output-referred image data d5 from scene-referred image data d4. The output-referred image data generating section 307 has the function of the output-referred image data generating section described in the Claims of the present invention.

The image adjustment processing apparatus 701 calls a predetermined image data (template) from the template memory section 272 when template processing is required. Image data is sent to the template processing section 705. It is merged with the template, and the image data subsequent to template processing is again received. In response to the instruction from the operation section 211 and control section 207, the image adjustment processing apparatus 701 applies image processing to the image data received from the film scanner 209, image transfer section 230, communications means (input) 240 and template processing section 705, in such a way that the image will provide a favorable impression when viewed on the outputting medium according to the method to be described later. Then the digital image data to be outputted is generated, and is sent to the CRT inherent processing section 706, printer inherent processing section (1) 707, image data form creation processing section 709 and data storage section 271. The image adjustment processing apparatus 701 has the function of the image forming section of the image recording apparatus described in the Claims of the present invention.

The CRT inherent processing section 706 applies processing of changing the number of pixels or color matching to the image data received from the image adjustment processing apparatus 701, as required. Then the image data for display merged with the information requiring control information, etc. is sent to the CRT 208. The printer inherent processing section (1) 707 provides processing of printer inherent calibration, color matching and change in the number of pixels, as required, and sends image data to the exposure processing section. When an external printer 251 such as a large-format inkjet printer is to be connected to the image recording apparatus 201, a printer inherent processing section (2) 708 is provided for each printer to be connected, so that adequate printer inherent calibration, color matching, change in the number of pixels and other processing can be carried out.

The image data form creation processing section 709 converts the image data received from the image adjustment processing apparatus 701, into various types of general-purpose image format represented by JPEG, TIFF and Exif as required. Then the image data is sent to the image transfer section 231 and communications means (input) 241.

The image data created by the output-referred image data generating section 307 assumes processing by the CRT inherent processing section 706, printer inherent processing section (1) 707, printer inherent processing section (2) 708 and image data form creation processing section 709. The image data form creation processing section 709 attaches to this image data the status file identifying the optimized image data for CRT, exposure output section, external printer, communications means (output) and others, based on output-referred image data d5, and sends the resultant image data separately to the image transfer section.

The above-mentioned division into the film scan data processing section 702, reflected document scanned data processing section 703, image data form deciphering processing section 704, image adjustment processing apparatus 701, CRT inherent processing section 706, printer inherent processing section (1) 707, printer inherent processing section (2) 708 and image data form creation processing section 709 is assumed to assist understanding of the functions of the image processing section 270. They need not necessarily be realized as physically independent devices. For example, they can be realized in the form of a division of the type of software processing in a single CPU.

The division of the header information analysis section 302, apparatus characteristic compensation processing 303a, image-capturing data processing section 306, scene-referred image data generating section 304 and output-referred image data generating section 307 is assumed to assist understanding of the functions of the image processing section 270 of the present invention. They need not necessarily be realized as physically independent devices. For example, they can be realized in the form of a division of the type of software processing in a single CPU. [Operation of image processing section 270]

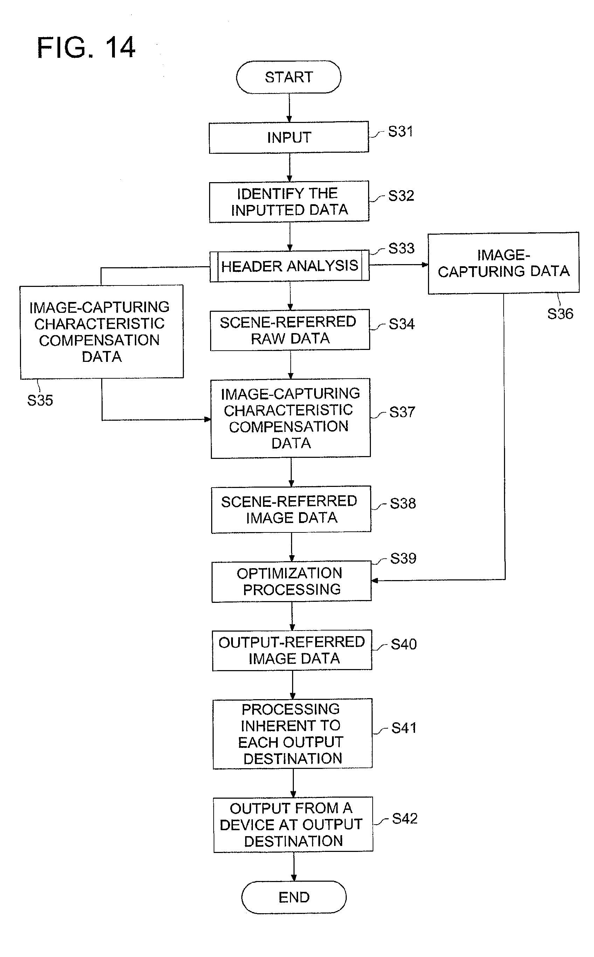

Fig. 14 is a flowchart representing image data formation processing to be carried out by interconnection among various parts of the image recording apparatus 201. Referring to drawings, the following describes the operations of each portion of the image processing section 270:

Data is inputted from the image transfer section 230 or communications means (input) 240 to the image processing section 270 (Step S31). When the image data form deciphering processing section 704 has identified this inputted data as the digital image data file by the above-mentioned image-capturing apparatus 21 or 22 (Step S32), the contents of the inputted digital image data file are analyzed by the header information analysis section 302 (Step S33), and the file is divvied into those for scene-referred raw data d2 (Step S34), image-capturing characteristic compensation data d1 (Step S35) and image-capturing information data d3 (Step S36).

The image-capturing characteristic compensation data d1 is outputted to the apparatus characteristic compensation processing 303a, and processing conditions for generating scene-referred image data d4 are determined by the apparatus characteristic compensation processing 303a referencing the processing condition table 303b. The scene-referred raw data d2 is outputted to the scene-referred image data generating section 304, and image-capturing characteristic compensation processing is carried out according to the processing conditions determined by the apparatus characteristic compensation processing 303a (Step S37). Then scene-referred image data d4 is generated and is outputted to the output-referred image data generating section 307 (Step S38).

The image-capturing information data d3 is outputted to the image-capturing data processing section 306, and processing conditions for generating the output-referred image data d5 in response to photographing conditions are determined by the image-capturing data processing section 306 on the basis of the image-capturing information data d3. Further, image processing conditions for generating the output-referred image data d5 suited to the outputting device and outputting medium are determined by the image adjustment processing apparatus 701, based on the instructions from the operation section 211 and control section 207. Optimization processing is applied to the scene-referred image data d4 having been inputted from the scene-referred image data generating section 304 by the output-referred image data generating section 307 in conformity to the processing conditions determined by the image-capturing data processing section 306 and those determinedly the image adjustment processing apparatus 701 (Step S39). Output-referred image data d5 is generated and is outputted to any one of the CRT inherent processing section 706, printer inherent processing section (1) 707, printer inherent processing section (2) 708 and image data form creation processing section 709 in conformity to the output destination (Step S40). In the processing section where the data is outputted, output-referred image data d5 is subjected to processing inherent to the output destination (Step S41), and is outputted from the output destination specified by the operation section 211 (Step S42).

As described above, the image recording apparatus 201 of the present invention allows the scene-referred raw data d2 outputted by the image-capturing apparatus 21 or 22 to generate the optimized output-referred image data d5, without the captured image information being lost, thereby ensuring quick formation of an output-referred image on such a display device as CRT, liquid crystal display and plasma display or on such an outputting medium as paper for hard copy image generation including silver halide photographic paper, inkjet paper and thermal printing paper.

As described above, the image-capturing apparatus of the present invention makes it possible to output:
(1) scene-referred raw data d2 as an direct raw output signal of the image-capturing apparatus faithfully recording the information of a subject, wherein there is omission of image processing of intentionally modifying the contents of data to improve the effect in viewing the image such as conversion of gradation, and enhancement of sharpness and color saturation, and the processing of mapping signal enhancement of each color channel based on the spectral sensitivity inherent to the image-capturing device, into the above-mentioned standardized color space such as RIMM RGB and sRGB; and
(2) the sufficient data for carrying out image-capturing characteristic compensation processing wherein the spectral sensitivity inherent to the image-capturing device or the matrix coefficient to be used for conversion into the standardized color space such as RIMM RGB and sRGB are written. At the same time, the above-mentioned image-capturing apparatus 21 omits processing of conversion into the scene-referred image data in the image-capturing apparatus, thereby reducing the processing load and power consumption of the image-capturing apparatus, improving the processing (photographing) capability and increasing the number of sheets to be processed (shot) in the battery mode.

Further, the image processing apparatus of the present invention allows the scene-referred image data to be generated from the scene-referred raw data outputted from the image-capturing apparatus, and creates the optimized output-referred image data, without the image-capturing information being lost, so that it is outputted to the onto such a display device as CRT, liquid crystal display and plasma display, and a storage medium of any known type such as paper for generation of hardcopy images including silver halide photographic paper, inkjet paper and thermal printing paper.

The image recording apparatus of the present invention allows the scene-referred image data to be generated from the scene-referred raw data outputted from the image-capturing apparatus, and ensures ensuring quick formation of an output-referred image on such a display device as CRT, liquid crystal display and plasma display or on such an outputting medium as paper for hard copy image generation including silver halide photographic paper, inkjet paper and thermal printing paper, wherein the optimized output-referred image data is retained, without the captured image information being lost.

Using an image processing apparatus of the present invention, the present inventors tried silver halide printing from the image data obtained from the digital image data according to the present invention. Contrary to their expectations, this test ended in a considerable reduction of skipping on the highlighted side or collapse on the shadow side, thereby demonstrating a substantial improvement in the image quality of the silver halide printing.

What is more surprising is that, when the present inventors have applied the present invention to a film scanner to create a silver halide print using the image processing apparatus according to the present invention, it has been found out that granular noise caused by a film as well as skipping on the highlighted side or collapse on the shadow side can be effectively reduced.

Disclosed embodiment can be varied by a skilled person without departing from the spirit and scope of the invention.

## Claims

1. An apparatus for capturing an image, comprising:
a scene-referred raw data generating section to generate scene-referred raw data, which directly represent said image while depending on image-capturing characteristics of said apparatus;
a reproduction-auxiliary data generating section to generate reproduction-auxiliary data, based on which an image-capturing characteristic compensation processing is to be applied to said scene-referred raw data generated by said scene-referred raw data generating section, so as to generate scene-referred image data in a standardized format from said scene-referred raw data; and
a storage controlling section to attach said reproduction-auxiliary data to said scene-referred raw data in order to store both of them into a storage medium.

2. The apparatus of claim 1, further comprising:
an image-capturing data generating section to generate image-capturing data, which represent image-capturing conditions established at a time of capturing said image;
wherein said storage controlling section attaches both said reproduction-auxiliary data and said image-capturing data to said scene-referred raw data in order to store all of them into said storage medium.

3. An apparatus for processing data, comprising:
a receiving section to receive scene-referred raw data, which directly represent an image captured by an image-capturing apparatus while depending on image-capturing characteristics of said image-capturing apparatus, and to receive reproduction-auxiliary data in respect to said scene-referred raw data; and
a scene-referred image data generating section to generate scene-referred image data from said scene-referred raw data received by said receiving section, based on said reproduction-auxiliary data received by said receiving section, by applying an image-capturing characteristic compensation processing to said scene-referred raw data.

4. The apparatus of claim 3,
wherein said scene-referred image data are generated in a standardized format from said scene-referred raw data.

5. The apparatus of claim 3,
wherein said receiving section also receives image-capturing data, which represent image-capturing conditions established at a time of capturing said image.

6. The apparatus of claim 4, further comprising:
an output-referred image data generating section to generate output-referred image data, based on which a reproduced image is formed on an outputting medium, by applying an image-processing for optimizing said reproduced image to said scene-referred image data generated by said scene-referred image data generating section.

7. The apparatus of claim 5, further comprising:
an output-referred image data generating section to generate output-referred image data, based on which a reproduced image is formed on an outputting medium, by applying an image-processing for optimizing said reproduced image to said scene-referred image data generated by said scene-referred image data generating section;
wherein contents of said image-processing are determined on the basis of said image-capturing data received by said receiving section.

8. An apparatus for outputting a reproduced image onto an outputting medium, comprising:
a receiving section to receive scene-referred raw data, which directly represent an image captured by an image-capturing apparatus while depending on image-capturing characteristics of said image-capturing apparatus, and to receive reproduction-auxiliary data in respect to said scene-referred raw data;
a scene-referred image data generating section to generate scene-referred image data from said scene-referred raw data received by said receiving section, based on said reproduction-auxiliary data received by said receiving section, by applying an image-capturing characteristic compensation processing to said scene-referred raw data;
an output-referred image data generating section to generate output-referred image data, based on which a reproduced image is formed on an outputting medium, by applying an image-processing for optimizing said reproduced image to said scene-referred image data generated by said scene-referred image data generating section; and
an image-forming section to form said reproduced image on said outputting medium, based on said output-referred image data.

9. The apparatus of claim 8,
wherein said receiving section also receives image-capturing data, which represent image-capturing conditions established at a time of capturing said image; and
wherein contents of said image-processing are determined on the basis of said image-capturing data received by said receiving section.

10. A method for processing data, comprising the steps of:
receiving scene-referred raw data, which directly represent an image captured by an image-capturing apparatus while depending on image-capturing characteristics of said image-capturing apparatus, and reproduction-auxiliary data in respect to said scene-referred raw data; and
applying an image-capturing characteristic compensation processing to said scene-referred raw data, based on said reproduction-auxiliary data received in said receiving step, in order to generate scene-referred image data from said scene-referred raw data.

11. The method of claim 10,
wherein said scene-referred image data are generated in a standardized format from said scene-referred raw data.

12. The method of claim 11,
wherein said reproduction-auxiliary data serve as image-capturing characteristic compensation data, which are employed for converting said scene-referred raw data into said scene-referred image data in a standardized color space.

13. The method of claim 11,
wherein, in said receiving step, image-capturing data, which represent image-capturing conditions established at a time of capturing said image, are also received.

14. The method of claim 11, further comprising the step of:
generating output-referred image data, based on which a reproduced image is formed on an outputting medium, by applying an image-processing for optimizing said reproduced image to said scene-referred image data generated in said applying step.

15. The method of claim 13, further comprising the step of:
generating output-referred image data, based on which a reproduced image is formed on an outputting medium, by applying an image-processing for optimizing said reproduced image to said scene-referred image data generated in said applying step;
wherein contents of said image-processing are determined on the basis of said image-capturing data received in said receiving step.
